# EUROPEAN PATENT APPLICATION

(11) **EP 4 733 814 A1**
(43) Date of publication of application: **29.04.2026**
(21) Application number: 24859086.1
(22) Date of filing: 11.06.2024
(51) Int. Cl.: G01T 7/00, G01N 23/04, G01N 23/18

(54) **X-RAY IMAGE ACQUISITION DEVICE, X-RAY IMAGE ACQUISITION SYSTEM, AND X-RAY IMAGE ACQUISITION METHOD**

(30) Priority: 30.08.2023 JP 2023139908
(71) Applicant: Hamamatsu Photonics K.K., Hamamatsu-shi, Shizuoka 435-8558 (JP)
(72) Inventor: SUYAMA Toshiyasu, Hamamatsu-shi, Shizuoka 435-8558 (JP); ONISHI Tatsuya, Hamamatsu-shi, Shizuoka 435-8558 (JP); TSUCHIYA Satoshi, Hamamatsu-shi, Shizuoka 435-8558 (JP)
(74) Representative: Hoffmann Eitle
(86) International application number: PCT/JP2024/021206
(87) International publication number: WO 2025/047040

(57) **Abstract**

An X-ray image acquisition device includes: a pixel unit having M (M is an integer of 2 or more) pixel arrays each including N (N is an integer of 2 or more) pixel portions for detecting X-rays; a control unit that controls detection of the X-rays by the pixel unit; and a processing unit that generates an X-ray image of the object based on a detection result of the X-rays by the pixel unit. The control unit controls the detection of the X-rays by the pixel unit so that the N pixel portions in each of the M pixel arrays sequentially detect the X-rays at a predetermined detection interval. When a value obtained by dividing an arrangement pitch of the N pixel portions by a reference speed corresponding to a movement speed of the object is a basic value, the detection interval is a value obtained by dividing the basic value by a pixel shift value that is an integer of 2 or more and N or less.

## Description

### Technical Field

One aspect of the present disclosure relates to an X-ray image acquisition device, an X-ray image acquisition system, and an X-ray image acquisition method.

### Background Art

Patent Literature 1 describes a line scan sensor that includes two pixel arrays arranged such that their positions are shifted diagonally from each other by half a pixel. By processing the data acquired with such a sensor, a high-resolution image can be generated.

### Citation List

### Patent Literature

Patent Literature 1: U.S. Patent Application Publication No. 2022/0005157

### Summary of Invention

### Technical Problem

On the other hand, for purposes such as inspecting foreign matter contamination in an object, there are cases where X-rays are emitted to the object being transported along a predetermined direction, the X-rays transmitted through the object are sequentially detected by a line scan sensor, and a two-dimensional image of the object is generated based on the detection result. The present inventors have found that, in such cases, simply applying a sensor of the type described above still leaves room for improvement in terms of the degree of freedom in image acquisition and an increase in the resolution of the acquired image.

Therefore, it is an object of one aspect of the present disclosure to provide an X-ray image acquisition device, an X-ray image acquisition system, and an X-ray image acquisition method that can improve the degree of freedom in image acquisition and increase the resolution of the acquired image.

### Solution to Problem

An X-ray image acquisition device according to one aspect of the present disclosure is [1] "an X-ray image acquisition device for acquiring an X-ray image of an object moving along a first direction, the device including: a pixel unit having M (M is an integer of 2 or more) pixel arrays each including N (N is an integer of 2 or more) pixel portions for detecting X-rays, the N pixel portions being aligned along the first direction and the M pixel arrays being aligned along a second direction intersecting the first direction; a control unit that controls detection of the X-rays by the pixel unit; and a processing unit that generates the X-ray image of the object based on a detection result of the X-rays by the pixel unit, wherein the control unit controls the detection of the X-rays by the pixel unit so that the N pixel portions in each of the M pixel arrays sequentially detect the X-rays at a predetermined detection interval, and assuming that a value obtained by dividing an arrangement pitch of the N pixel portions in the first direction by a reference speed corresponding to a movement speed of the object along the first direction is a basic value, the detection interval is a value obtained by dividing the basic value by a pixel shift value that is an integer of 2 or more and N or less".

In this X-ray image acquisition device, in each of the M pixel arrays, N pixel portions sequentially detect X-rays at a predetermined detection interval. The detection interval is set to a value obtained by dividing the basic value, which is obtained by dividing the arrangement pitch of the N pixel portions by the reference speed corresponding to the movement speed of the object, by the pixel shift value that is an integer of 2 or more and N or less. In this manner, by generating the X-ray image of the object based on data detected at a detection interval shorter than the basic value, it is possible to increase the resolution of the X-ray image. In addition, when the positions of the two pixel arrays are shifted from each other as in Patent Literature 1 described above, it is possible to increase the resolution, but the resolution cannot be changed. Therefore, the degree of freedom (flexibility) in acquiring an image is low. In contrast, in this X-ray image acquisition device, the detection interval can be changed by changing the pixel shift value, and the resolution of the X-ray image can be increased to a level according to the pixel shift value. Therefore, it is possible to improve the degree of freedom in image acquisition. In addition, when acquiring an X-ray image, the resolution of the object in its movement direction tends to decrease due to blurring. However, in this X-ray image acquisition device, since the resolution in the first direction can be increased by shortening the detection interval of the N pixel portions aligned along the first direction, it is possible to suitably increase the resolution of the acquired image. Therefore, according to this X-ray image acquisition device, it is possible to improve the degree of freedom in image acquisition and increase the resolution of the acquired image.

The X-ray image acquisition device according to one aspect of the present disclosure may be [2] "the X-ray image acquisition device according to [1], wherein the pixel shift value is selected from integers of 2 or more and N or less according to an input". In this case, it is possible to further improve the degree of freedom in image acquisition. **In** addition, N may be an integer of 3 or more.

The X-ray image acquisition device according to one aspect of the present disclosure may be [3] "the X-ray image acquisition device according to [1] or [2], wherein the control unit is configured to be capable of setting the detection interval to the basic value ". In this case, it is possible to further improve the degree of freedom in image acquisition.

The X-ray image acquisition device according to one aspect of the present disclosure may be [4] "the X-ray image acquisition device according to any one of [1] to [3], wherein the control unit controls the detection of the X-rays by the pixel unit so that each of the N pixel portions detects the X-rays for a period shorter than the basic value". In this case, it is possible to further increase the resolution of the X-ray image.

The X-ray image acquisition device according to one aspect of the present disclosure may be [5] "the X-ray image acquisition device according to any one of [1] to [4], wherein the control unit controls the detection of the X-rays by the pixel unit so that each of the N pixel portions detects the X-rays multiple times during a detection period corresponding to the basic value". In this case, it is possible to increase the resolution of the X-ray image while suppressing a decrease in the brightness of the X-ray image.

The X-ray image acquisition device according to one aspect of the present disclosure may be [6] "the X-ray image acquisition device according to any one of [1] to [5], wherein the processing unit generates the X-ray image having a plurality of pixel regions by processing pieces of output data, which are detection results of the N pixel portions, so that the pieces of output data transmitted through the same region in the object are superimposed on each other, and when generating the X-ray image, the processing unit processes the output data so that, among the pieces of output data forming one of the pixel regions, at least one piece of the output data that is different from the pieces of the output data forming the pixel region adjacent to the one pixel region is emphasized more than the pieces of the output data other than the at least one different piece of the output data, the adjacent pixel region being the pixel region adjacent to the one pixel region on a side where a detection timing in a direction corresponding to the first direction is earlier". In this case, it is possible to increase the resolution of the X-ray image while suppressing a decrease in the brightness of the X-ray image.

An X-ray image acquisition system according to one aspect of the present disclosure is [7] "an X-ray image acquisition system, including: the X-ray image acquisition device according to any one of [1] to [6]; an X-ray source that outputs the X-rays; and a transport unit that transports the object along the first direction". According to this X-ray image acquisition system, for the reasons described above, it is possible to improve the degree of freedom in image acquisition and increase the resolution of the acquired image.

An X-ray image acquisition method according to one aspect of the present disclosure is [8] "an X-ray image acquisition method, including: a detection step for irradiating an object moving along a first direction with X-rays and detecting X-rays transmitted through the object using a pixel unit; and a processing step for generating an X-ray image of the object based on a detection result in the detection step, wherein the pixel unit has M (M is an integer of 2 or more) pixel arrays each including N (N is an integer of 2 or more) pixel portions for detecting X-rays, the N pixel portions being aligned along the first direction and the M pixel arrays being aligned along a second direction intersecting the first direction, in the detection step, the N pixel portions in each of the M pixel arrays sequentially detect the X-rays at a predetermined detection interval, and assuming that a value obtained by dividing an arrangement pitch of the N pixel portions in the first direction by a reference speed corresponding to a movement speed of the object along the first direction is a basic value, the detection interval is a value obtained by dividing the basic value by a pixel shift value that is an integer of 2 or more and N or less". According to this X-ray image acquisition method, for the reasons described above, it is possible to improve the degree of freedom in image acquisition and increase the resolution of the acquired image.

### Advantageous Effects of Invention

According to one aspect of the present disclosure, it is possible to provide an X-ray image acquisition device, an X-ray image acquisition system, and an X-ray image acquisition method that can improve the degree of freedom in image acquisition and increase the resolution of the acquired image.

### Brief Description of Drawings

[FIG. 1] FIG. 1 is a configuration diagram of an X-ray image acquisition system according to an embodiment.
[FIG. 2] FIG. 2 is a configuration diagram of an X-ray camera.
[FIG. 3] FIG. 3 is a flowchart for explaining a process executed in an X-ray image acquisition device.
[FIG. 4] FIG. 4 is a diagram for explaining a reference speed.
[FIG. 5] FIGS. 5(a) and 5(b) are diagrams for explaining a normal TDI operation.
[FIG. 6] FIGS. 6(a) and 6(b) are diagrams for explaining a normal TDI operation.
[FIG. 7] FIG. 7 is a diagram for explaining addition processing in a normal TDI operation.
[FIG. 8] FIGS. 8(a) and 8(b) are diagrams for explaining an operation when a pixel shift value I is 4.
[FIG. 9] FIGS. 9(a) and 9(b) are diagrams for explaining an operation when the pixel shift value I is 4.
[FIG. 10] FIG. 10 is a diagram for explaining addition processing when the pixel shift value I is 4.
[FIG. 11] FIG. 11 is a diagram for explaining addition processing when the pixel shift value I is 4.
[FIG. 12] FIGS. 12(a) and 12(b) are diagrams for explaining an operation when the pixel shift value I is 3.
[FIG. 13] FIG. 13 is a diagram for explaining an operation when the pixel shift value I is 3.
[FIG. 14] FIG. 14 is a diagram for explaining addition processing when the pixel shift value I is 3.
[FIG. 15] FIG. 15 is a diagram for explaining addition processing when the pixel shift value I is 3.
[FIG. 16] FIGS. 16(a) and 16(b) are diagrams for explaining an operation when the pixel shift value I is 2.
[FIG. 17] FIGS. 17(a) and 17(b) are diagrams for explaining an operation when the pixel shift value I is 2.
[FIG. 18] FIG. 18 is a diagram for explaining a first example of addition processing when the pixel shift value I is 2.
[FIG. 19] FIG. 19 is a diagram for explaining a first example of addition processing when the pixel shift value I is 2.
[FIG. 20] FIG. 20 is a diagram for explaining a second example of addition processing when the pixel shift value I is 2.
[FIG. 21] FIG. 21 is a diagram for explaining a second example of addition processing when the pixel shift value I is 2.
[FIG. 22] FIG. 22 is a diagram showing a first example of the configuration of a processing unit.
[FIG. 23] FIG. 23 is a diagram showing a second example of the configuration of the processing unit.
[FIG. 24] FIG. 24 is a diagram showing a third example of the configuration of the processing unit.
[FIG. 25] FIGS. 25(a) and 25(b) are diagrams for explaining the operation of a first modification example.
[FIG. 26] FIGS. 26(a) and 26(b) are diagrams for explaining the operation of the first modification example.
[FIG. 27] FIGS. 27(a) and 27(b) are diagrams for explaining the operation of a second modification example.
[FIG. 28] FIGS. 28(a) and 28(b) are diagrams for explaining the operation of the second modification example.
[FIG. 29] FIG. 29 is a diagram for explaining addition processing in the second modification example.
[FIG. 30] FIG. 30 is a diagram for explaining addition processing in the second modification example.
[FIG. 31] FIG. 31 is a diagram for explaining addition processing in the second modification example.
[FIG. 32] FIG. 32 is a diagram showing an object and pixels in an assumed example.
[FIG. 33] FIG. 33 is a diagram for explaining the detection of an object in an assumed example.
[FIG. 34] FIG. 34 is a diagram for explaining the detection of an object in an assumed example.
[FIG. 35] FIG. 35 is a diagram for explaining the detection of an object in an assumed example.
[FIG. 36] FIG. 36 is a diagram for explaining the detection of an object in an assumed example.
[FIG. 37] FIG. 37 is a diagram for explaining the detection of an object in an assumed example.
[FIG. 38] FIG. 38 is a diagram for explaining the detection of an object in an assumed example.
[FIG. 39] FIG. 39 is a diagram for explaining the detection of an object in an assumed example.
[FIG. 40] FIG. 40 is a diagram for explaining a first simulation result.
[FIG. 41] FIG. 41 is a diagram for explaining a second simulation result.
[FIG. 42] FIGS. 42(a) and 42(b) are diagrams for explaining the shortening of an exposure period.
[FIG. 43] FIG. 43 is a diagram for explaining a third simulation result.
[FIG. 44] FIG. 44 is a diagram for explaining additional simulation results.
[FIG. 45] FIG. 45 is a diagram for explaining a modification example of the shortening of the exposure period.

### Description of Embodiments

Hereinafter, embodiments of the present disclosure will be described in detail with reference to the diagrams. In the following description, the same or equivalent elements are denoted by the same reference numerals, and repeated description thereof will be omitted.

### [X-ray image acquisition system]

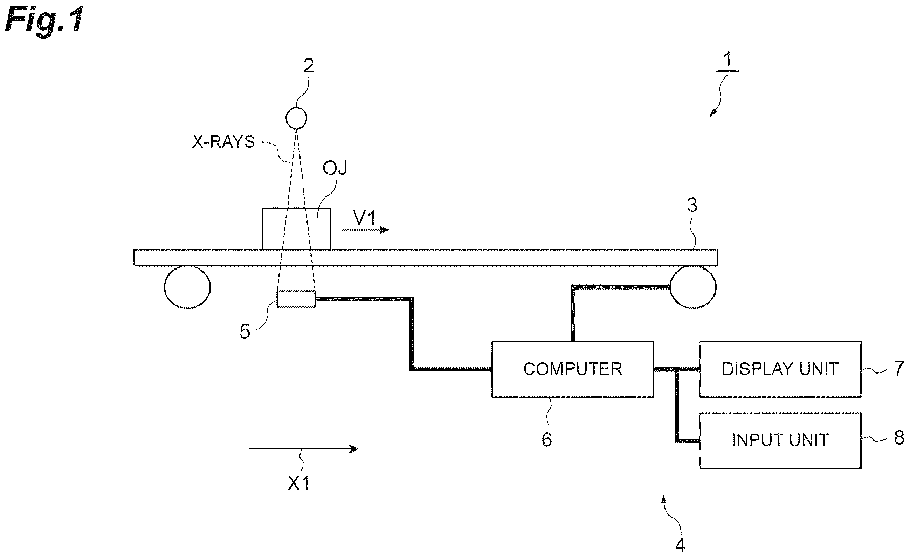

An X-ray image acquisition system 1 shown in FIG. 1 is a system for acquiring an X-ray image of an object OJ that is transported (moving) along a first direction X1. That is, the first direction X1 is the transport direction (movement direction) of the object OJ. The X-ray image acquisition system 1 includes an X-ray source 2, a transport unit 3, and an X-ray image acquisition device 4. The X-ray image acquisition device 4 includes an X-ray camera 5, a computer 6, a display unit 7, and an input unit 8.

The X-ray source 2 outputs X-rays. The transport unit 3 is, for example, a belt conveyor, and transports the object OJ placed on the belt along the first direction X1. A transport path by the transport unit 3 is set so as to pass through the emission range of X-rays from the X-ray source 2. As an example, the object OJ is food, and the X-ray image acquisition system 1 is used to inspect whether or not foreign matter is mixed in the object OJ.

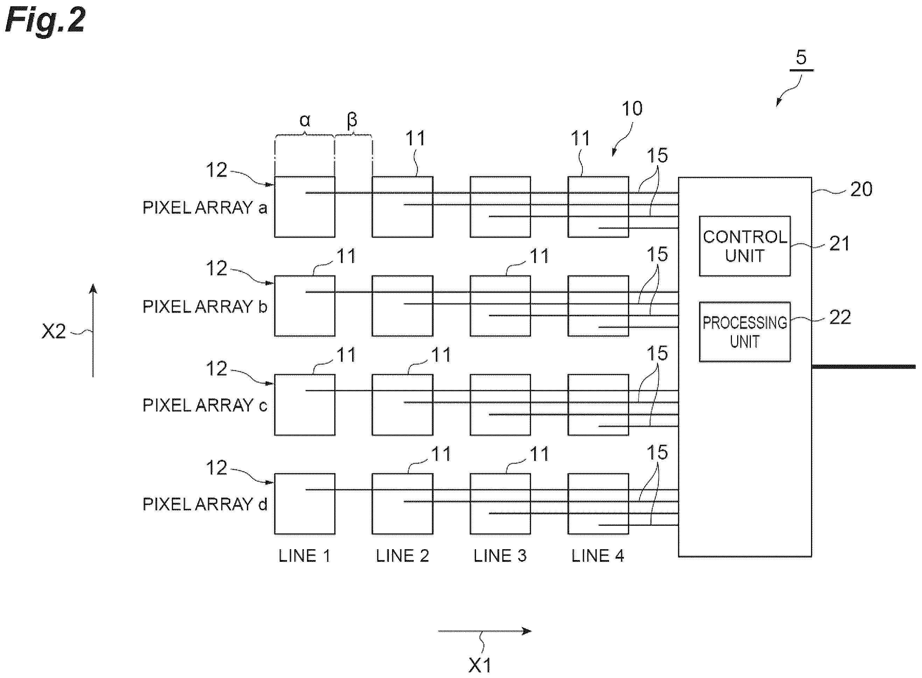

As shown in FIG. 2, the X-ray camera 5 includes a pixel unit 10 and a circuit unit 20. In the X-ray camera 5, for example, X-rays transmitted through the object OJ are converted into scintillation light by a scintillator and the scintillation light is detected by the pixel unit 10, thereby acquiring an X-ray image of the object OJ. In this case, the X-ray camera 5 includes a scintillator arranged above the pixel unit 10 (between the pixel unit 10 and the transport unit 3). Alternatively, the pixel unit 10 may be configured as a direct conversion type detector that converts incident X-rays directly into electrical signals without converting the X-rays into light. In this case, the scintillator is omitted. Examples of the direct conversion type detector include a compound semiconductor detector, such as a CdTe detector and a CdZnTe detector, and an Si direct conversion type detector.

The pixel unit 10 and the circuit unit 20 are formed on, for example, a single chip and are integrated with each other. The pixel unit 10 has M (M is an integer of 2 or more) pixel arrays 12 each including N (N is an integer of 2 or more) pixel portions 11 that perform photoelectric conversion. Each pixel portion 11 is formed, for example, in a square shape. In addition, the pixel unit 10 and the circuit unit 20 may be formed on separate chips, and these chips may be electrically connected to each other.

The N pixel portions 11 are aligned in a row along the first direction X1 with a fixed interval (interval β) therebetween. The M pixel arrays 12 are aligned along a second direction X2 intersecting (in this example, perpendicular to) the first direction X1 with a constant interval therebetween. The A-th (A is an arbitrary integer of 1 to N) pixel portions 11 in the M pixel arrays 12 are arranged in a row along the second direction X2. That is, in the pixel unit 10, N × M pixel portions 11 are arranged in a matrix. The first direction X1 and the second direction X2 are, for example, directions perpendicular to the vertical direction.

N may be an integer of 8 or more, or may be an integer of 16 or more. Hereinafter, a case where N and M are 4 will be described as an example. However, the same applies to cases where N and M are other values. Each pixel portion 11 is configured by, for example, a light receiving element capable of detecting scintillation light. The light receiving element is, for example, a photodiode formed of silicon. However, the light receiving element may be a photodiode formed of a compound semiconductor such as InGaAs or CdTe. The pixel unit 10 may be a multi-line sensor as in the example of FIG. 2, or may be an area sensor. The pixel unit 10 may be configured by an SiPM (Silicon Photomultiplier). An example of the SiPM is an MPPC (Multi-Pixel Photon Counter; registered trademark).

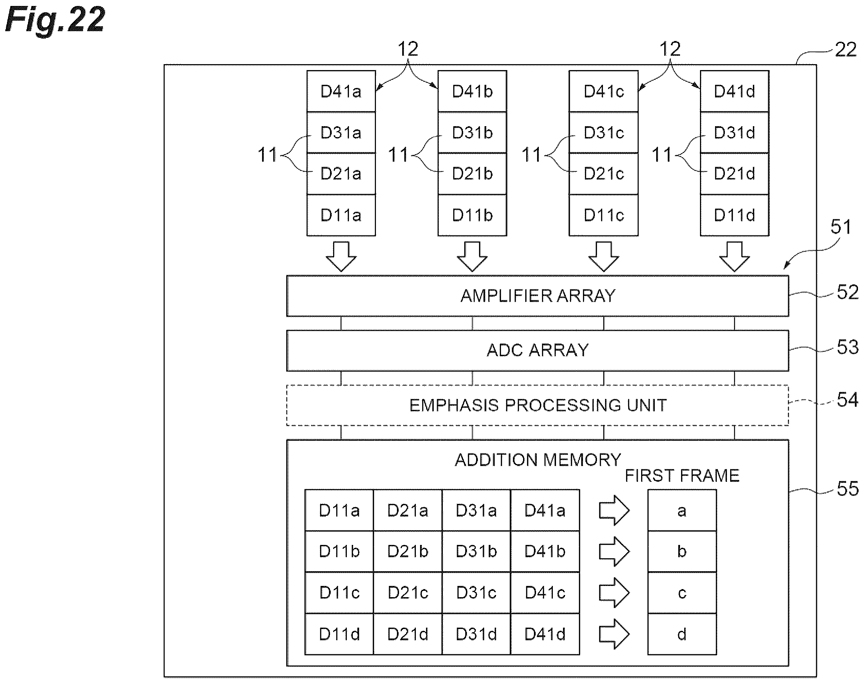

The circuit unit 20 includes a control unit 21 and a processing unit 22. The control unit 21 is configured by, for example, a microcomputer mounted on a chip, but may be configured by any circuit element such as an FPGA (Field-Programmable Gate Array). The control unit 21 controls the detection of X-rays by the pixel unit 10. The processing unit 22 generates an X-ray image of the object OJ based on the X-ray detection result of the pixel unit 10. That is, the processing unit 22 is an image processing unit that performs image processing. A specific example of the configuration of the processing unit 22 will be described later with reference to FIGS. 22 to 24. The circuit unit 20 (the control unit 21 and the processing unit 22) is electrically connected to each pixel portion 11 through, for example, wiring 15.

The circuit unit 20 is electrically connected to the computer 6. The computer 6 includes a processor, such as a CPU, and storage media, such as a RAM and a ROM. The computer 6 controls the operation of each unit of the X-ray image acquisition system 1. For example, the computer 6 is electrically connected to the transport unit 3 to control the operation of the transport unit 3. In this example, explanation will be given on the assumption that the control unit 21 controls the detection of X-rays by the pixel unit 10. However, the computer 6 may perform this control. That is, the computer 6 may function as a control unit. In this case, the control unit 21 may be omitted. In addition, in this example, explanation will be given on the assumption that the processing unit 22 generates an X-ray image of the object OJ based on the X-ray detection result of the pixel unit 10. However, the computer 6 may perform this generation. That is, the computer 6 may function as a processing unit. In this case, the processing unit 22 may be omitted. The control unit that controls the detection of X-rays by the pixel unit 10 and the processing unit that generates an X-ray image of the object OJ based on the X-ray detection result of the pixel unit 10 may be configured by a common element (for example, the computer 6).

The display unit 7 is, for example, a display connected to the computer 6, and displays various kinds of information on the screen. The input unit 8 is, for example, a mouse, a keyboard, and the like connected to the computer 6, and receives operation inputs from the user. The display unit 7 and the input unit 8 may be configured as a touch display that integrates a display unit and an input unit or as a smart device such as a smartphone or a tablet device.

### [X-ray image acquisition method]

In an X-ray image acquisition method according to an embodiment, X-rays are emitted from the X-ray source 2 to the object OJ being transported along the first direction X1, and the X-rays transmitted through the object OJ are detected by the pixel unit 10 (detection step). Then, the processing unit 22 generates an X-ray image of the object OJ based on the detection result in the detection step (processing step). The processing step may be executed after the detection of the transmitted X-rays in the detection step is completed, or may be executed in parallel with the detection of the transmitted X-rays in the detection step.

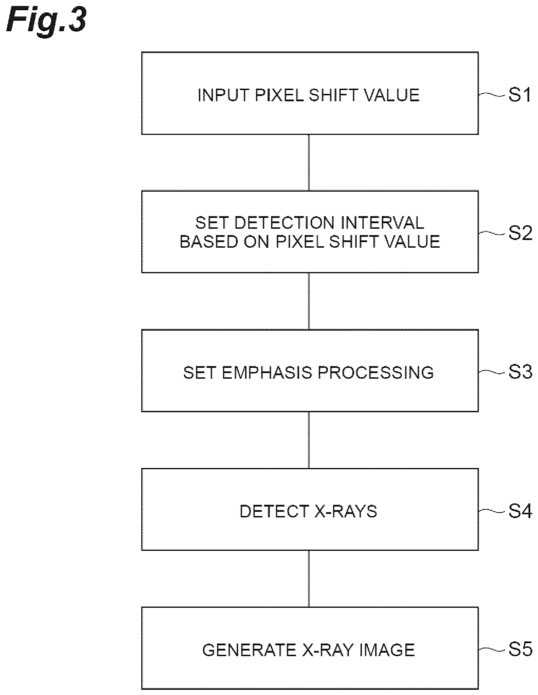

Referring to FIG. 3, a process executed by the X-ray image acquisition device 4 when acquiring an X-ray image will be described schematically. First, an input for selecting the pixel shift value I is received (step S1). In this example, the pixel shift value I is an integer of 1 to N. The input is received, for example, by the user operating the input unit 8. The control unit 21 selects the pixel shift value I from integers of 1 or more and N or less according to the input. Then, the control unit 21 sets a detection interval ΔT based on the pixel shift value I (step S2). Then, the control unit 21 sets whether or not to perform emphasis processing (step S3). As will be described later, emphasis processing may not be performed. Then, the control unit 21 controls the detection of X-rays by the pixel unit 10 so that the N pixel portions 11 in each of the M pixel arrays 12 sequentially detect X-rays at a detection interval ΔT (step S4). As a result, output data that is the detection result of each pixel portion 11 is obtained. Then, the processing unit 22 generates an X-ray image of the object OJ based on the detection result in step S4 (step S5). Steps S1 to S4 are the processing of the detection step, and step S5 is the processing of the processing step. Hereinafter, these processes will be described in detail with reference to specific examples.

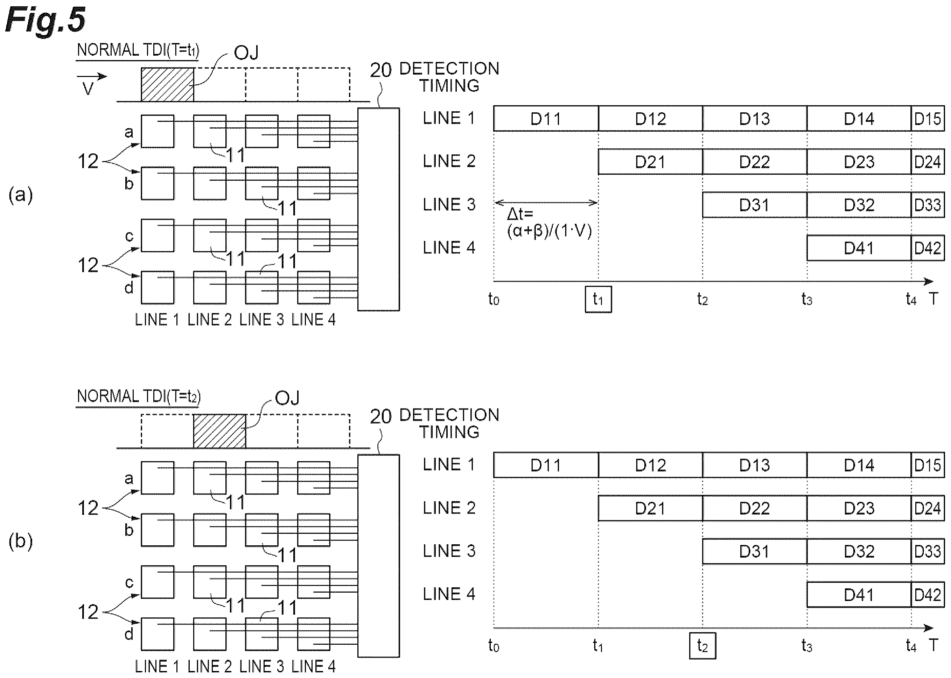

FIGS. 5 to 7 are diagrams for explaining a normal TDI (Time Delay Integration) operation. This operation corresponds to a case where the pixel shift value I is 1. That is, when 1 is selected as the pixel shift value I in step S1, the X-ray image acquisition device 4 performs a normal TDI operation.

The left side of FIG. 5(a) shows a positional relationship between the object OJ and the pixel unit 10 at time T = t1, and the right side of FIG. 5(a) shows the imaging timing of lines 1, 2, 3, and 4. The fact that the positional relationship between the object OJ and the pixel unit 10 is shown on the left side and the imaging timing of the lines 1 to 4 is shown on the right side applies similarly to FIGS. 5(b), 6, 8, 9, 12, 13, 16, 17, and 25 to 28 described later. The line 1 is a line of the pixel portions 11 formed by the first pixel portion 11 of the M pixel arrays 12 arranged along the second direction X2, and similarly, the lines 2, 3, and 4 are lines of the pixel portions 11 formed by the second, third, and fourth pixel portions 11 of the M pixel arrays 12 arranged along the second direction X2. Hereinafter, as shown in FIG. 5(a), the pixel arrays 12 will also be referred to as pixel arrays a, b, c, and d, respectively.

As shown in FIG. 5(a), in a normal TDI operation, the detection interval ΔT (imaging interval) is set to (α + β)/(1 × V). That is, in the X-ray image acquisition method according to the embodiment, the detection interval ΔT is set to (α + β)/(I × V). However, in this example, since I = 1, the detection interval ΔT is set to (α + β)/(1 × V). As shown in FIG. 2, α is the width of the pixel portion 11 in the first direction X1. β is an interval in the first direction X1 between the pixel portions 11 adjacent to each other in the first direction X1. (α + β) corresponds to the arrangement pitch of the pixel portions 11 in the first direction X1 (the distance between the centers of the pixel portions 11 adjacent to each other). The interval β may be zero. In this case, the pixel portions 11 are aligned with no gap therebetween along the first direction X1. In this case, the arrangement pitch is equal to the width α.

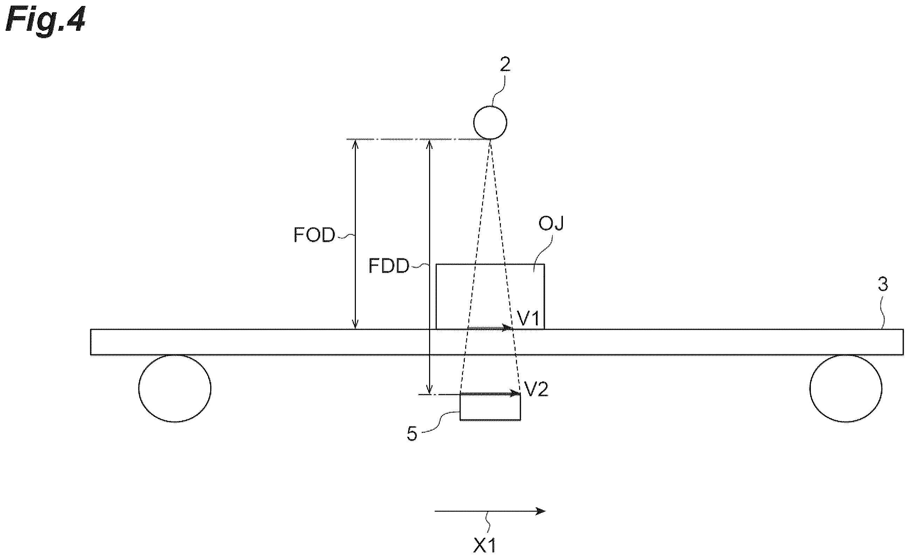

V is a reference speed corresponding to the movement speed V1 (determined based on the movement speed V1) of the object OJ along the first direction X1. The reference speed V will be described with reference to FIG. 4. The reference speed V may be the movement speed V1 (transport speed) at which the object OJ is transported by the transport unit 3. Alternatively, the reference speed V may be an apparent speed V2 on the pixel unit 10, taking into consideration a magnification factor of X-rays from the X-ray source 2 to the X-ray camera 5. The magnification factor is calculated by FDD/FOD. The FOD (Focus to Object Distance) is a distance from the X-ray source 2 to the object OJ. The FDD (Focus to Detector Distance) is a distance from the X-ray source 2 to the X-ray camera 5. The apparent speed V2 is calculated by (FDD/FOD) ×V1. By using the apparent speed V2, which takes the magnification factor into consideration, as the reference speed V, image acquisition can be performed more suitably.

Thus, in the X-ray image acquisition method according to the embodiment, the detection interval ΔT is set to (α + β)/(I × V). (α + β) is the arrangement pitch of the pixel portion 11, and V is the reference speed. That is, assuming that a value obtained by dividing the arrangement pitch (α + β) by the reference speed V is a basic value, the detection interval ΔT is set to a value obtained by dividing the basic value (α + β)/V by the pixel shift value I. In the normal TDI operation shown in FIGS. 5 to 7, I = 1, so that the detection interval ΔT is set to the basic value itself.

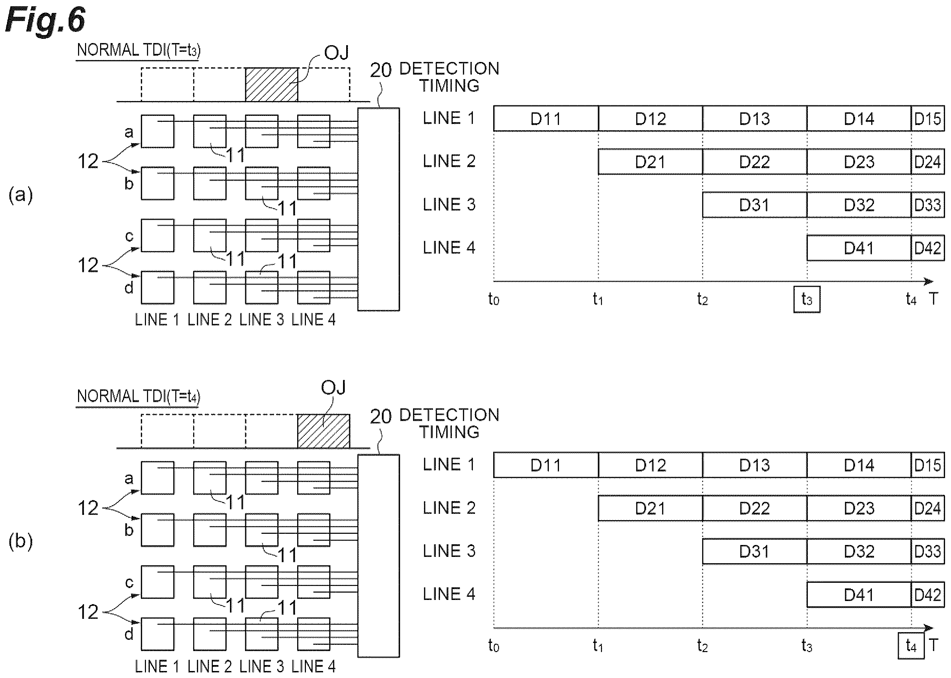

As shown in FIG. 5(a), the detection result of a line 1 in a detection period 1 from start time T = t0 to time T = t1 is output from the line 1 as output data D11. Output data Dpq is output data indicating the detection result of a line p (p = 1, 2, ..., N) in a frame q (q = 1, 2, ...) (detection period). As shown in FIG. 5(b), the detection result of each line in a detection period 2 from time T = t1 to time T = t2 is output from the line 1 as output data D12 and output from the line 2 as output data D21. The length of the frame q is equal to the base value (α + β)/V. In FIGS. 5(a) and 5(b), a portion of the object OJ corresponding to the frame 1 is shown hatched. This also applies to FIGS. 6, 8, 9, 12, 13, 16, 17, and 25 to 28, which will be described later. In FIG. 5(a), the portion of the object OJ corresponding to the frame 1 is located above the line 1, and in FIG. 5(b), the portion of the object OJ corresponding to the frame 1 is located above the line 2, and the portion of the object OJ corresponding to the frame 2 is located above the line 1.

As shown in FIG. 6(a), the detection result of each line in a detection period 3 from time T = t2 to time T = t3 is output from the line 1 as output data D13, output from the line 2 as output data D22, and output from the line 3 as output data D31. As shown in FIG. 6(b), the detection result of each line in a detection period 4 from time T = t3 to time T = t4 is output from the line 1 as output data D14, output from the line 2 as output data D23, output from the line 3 as output data D32, and output from the line 4 as output data D41. In this manner, in the X-ray image acquisition device 4, the N pixel portions 11 sequentially detect X-rays at a detection interval ΔT (step S4, detection step). This X-ray detection is performed simultaneously for the respective pixel arrays 12 (pixel arrays a to d).

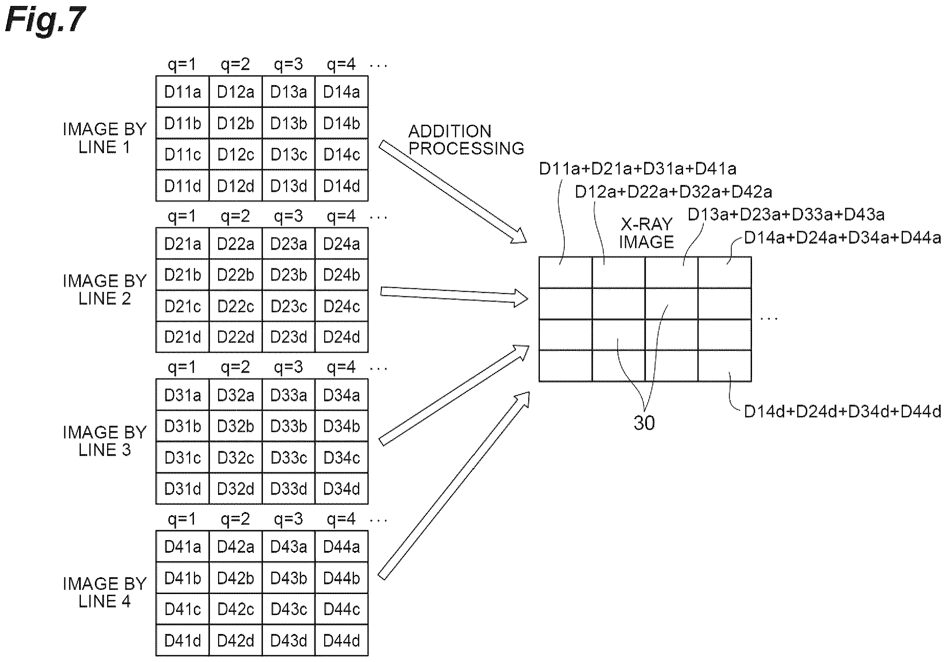

FIG. 7 is a diagram for explaining addition processing in a normal TDI operation. The addition processing is performed by the processing unit 22. By this addition processing, an X-ray image of the object OJ is generated (step S5, processing step). As shown in FIG. 7, in the addition processing, the output data that is the detection results of the pixel portions 11 are processed so that the pieces of output data transmitted through the same region of the object OJ are superimposed on each other, thereby generating an X-ray image of the object OJ.

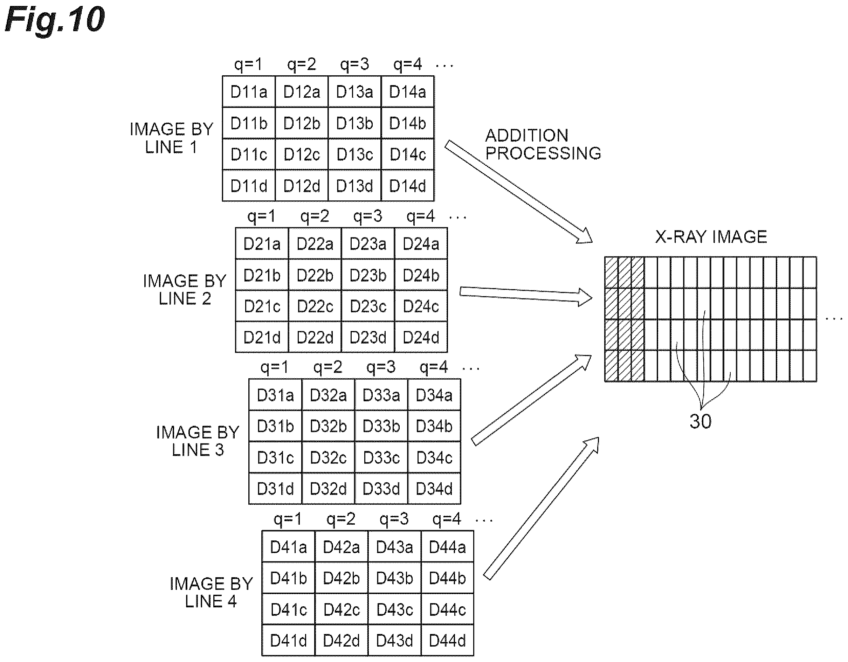

On the left side of FIG. 7, output data (output image) from the lines 1 to 4 is shown. Output data Dpqr is output data of the frame q (q = 1, 2, ...) from a pixel array r (r = a, b, c, d) of the line p (p = 1, 2, ..., N). In addition, although the pixel array r is indicated by an alphabet for convenience, the number of pixel arrays r may be any integer of 1 or more. For example, the number of pixel arrays r may be 1536 pixels, 4608 pixels, or 6144 pixels. These points also apply to FIGS. 10, 14, 18, and 20, which will be described later. As shown on the right side of FIG. 7, the pieces of output data from the lines 1 to 4 are added together to generate an X-ray image of the object OJ having a plurality of pixel regions 30.

As shown in FIG. 7, for example, the value (pixel value) of the first pixel region 30 corresponding to the pixel array a is D11a + D21a + D31a + D41a. The value of the second pixel region 30 corresponding to the pixel array a is D12a + D22a + D32a + D42a. The value of the third pixel region 30 corresponding to the pixel array a is D13a + D23a + D33a + D43a. The value of the fourth pixel region 30 corresponding to pixel array a is D14a + D24a + D34a + D44a. The value of the fourth pixel region 30 corresponding to the pixel array d is D14d + D24d + D34d + D44d. Thus, in a normal TDI operation, it is possible to generate an X-ray image with a brightness four times higher than that when an output image from a single line is simply used as an X-ray image.

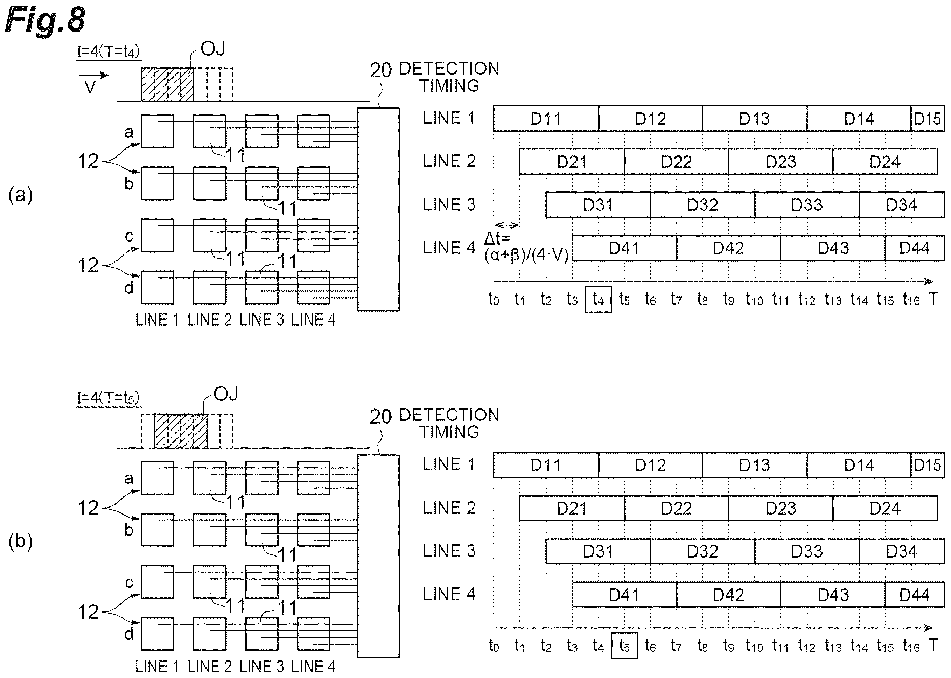

FIGS. 8 to 11 are diagrams for explaining an operation when the pixel shift value I is 4. That is, when 4 is selected as the pixel shift value I in step S1, the X-ray image acquisition device 4 performs the following operation.

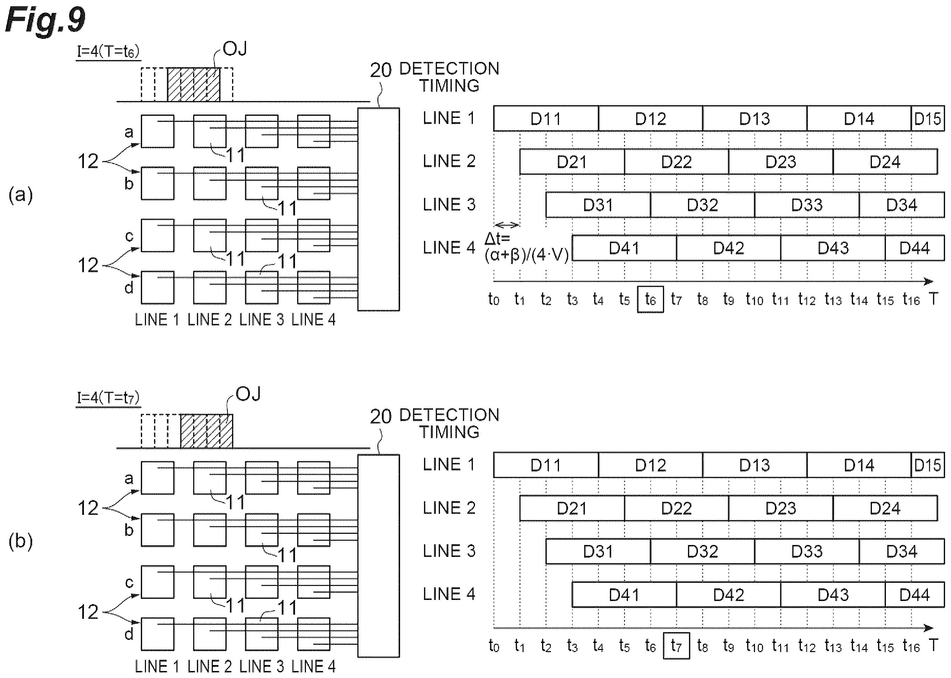

As shown in FIG. 8(a), when the pixel shift value I is 4, the detection interval ΔT is set to (α + β)/(4 × V). Then, as shown in FIGS. 8 and 9, detection (imaging) is performed at the detection interval ΔT that is shorter than that in the case of normal TDI operation (when the pixel shift value I is 1). For example, the detection result of each line in a detection period 1 from time T = t3 to time T = t4 is output from the line 1 as output data D11, output from the line 2 as output data D21, output from the line 3 as output data D31, and output from the line 4 as output data D41.

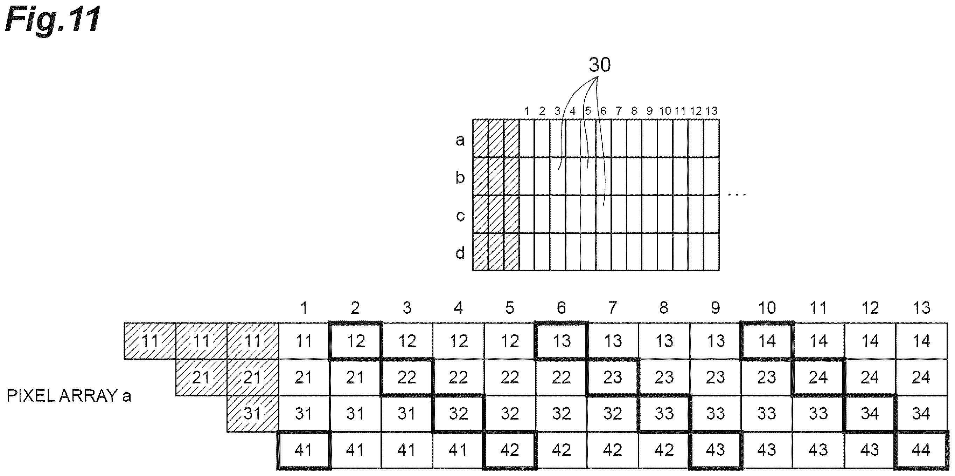

FIGS. 10 and 11 are diagrams for explaining addition processing when the pixel shift value I is 4. In the normal TDI operation described above, the output data from the lines 1 to 4 is X-ray output data from the same region of the object OJ, whereas when the pixel shift value I is 4, as shown on the left side of FIG. 10, the output data from the lines 1 to 4 is X-ray output data from regions of the object OJ that are shifted from each other in the first direction X1 by 1/4 of the width of the pixel portion 11 (1/4 pixel shift).

As shown in FIG. 10, the pieces of output data from the lines 1 to 4 are added together to generate an X-ray image of the object OJ having a plurality of pixel regions 30. FIG. 11 shows the value of each pixel region 30 corresponding to the pixel array a. For example, the value (pixel value) of the first pixel region 30 corresponding to the pixel array a is D11a + D21a + D31a + D41a. The value of the second pixel region 30 corresponding to the pixel array a is D12a + D21a + D31a + D41a. The value of the third pixel region 30 corresponding to the pixel array a is D12a + D22a + D31a + D41a. The value of the thirteenth pixel region 30 corresponding to the pixel array a is D14a + D24a + D34a + D44a. In addition, as shown by hatching in FIGS. 10 and 11, in a period from start time T = t0 to T = t3, the output data from all of the lines 1 to 4 is not acquired. For this reason, X-ray images may not be generated for the range corresponding to the period. Similarly, for pixel arrays b to d, the pieces of output data from the lines 1 to 4 are added together.

In addition, in the above example, the pieces of output data from the lines 1 to 4 are added together. However, when adding the output data from N lines, it is also possible to perform a filter process to multiply each piece of output data by 1/N and then add the filtered output data.

Emphasis processing (step S3) will be described with reference to FIG. 11. When it is set not to perform the emphasis processing in step S3, the output data from the lines 1 to 4 are added up equally (simple addition) as described above. On the other hand, when it is set to perform the emphasis processing in step S3, anomalous data among the pieces of output data from the lines 1 to 4 is emphasized and added by the following emphasis processing (emphasis addition).

In FIG. 11, anomalous data is indicated by a thick frame. The anomalous data is data, among the pieces of output data forming a certain pixel region 30, which is different from the output data forming the pixel region 30 adjacent to the certain pixel region 30 on a side where the detection timing in a direction corresponding to the first direction X1 is earlier. For example, in the second pixel region 30, the output data D12a is different from the output data forming the adjacent first pixel region 30. In this case, for example, as a first example, the anomalous data may be multiplied by n (n is a value greater than 1) and the value of the second pixel region 30 may be nD12a + D21a + D31a + D41a. Alternatively, as a second example, data other than the anomalous data may be multiplied by m (m is a value greater than 0 and less than 1), and the value of the second pixel region 30 may be D12a + mD21a + mD31a + mD41a. In addition, from the viewpoint of increasing the value of the pixel region 30, the first example is preferable.

In the third pixel region 30, the output data D22a is different from the output data forming the adjacent second pixel region 30. In this case, in the first example, the value of the third pixel region 30 may be D12a + nD22a + D31a + D41a. In the second example, the value of the third pixel region 30 may be mD12a + D22a + mD31a + mD41a. Similarly, in the first example, the value of the first pixel region 30 may be D11a + D21a + D31a + nD41a. In the second example, the value of the first pixel region 30 may be mD12a + mD21a + mD31a + D41a.

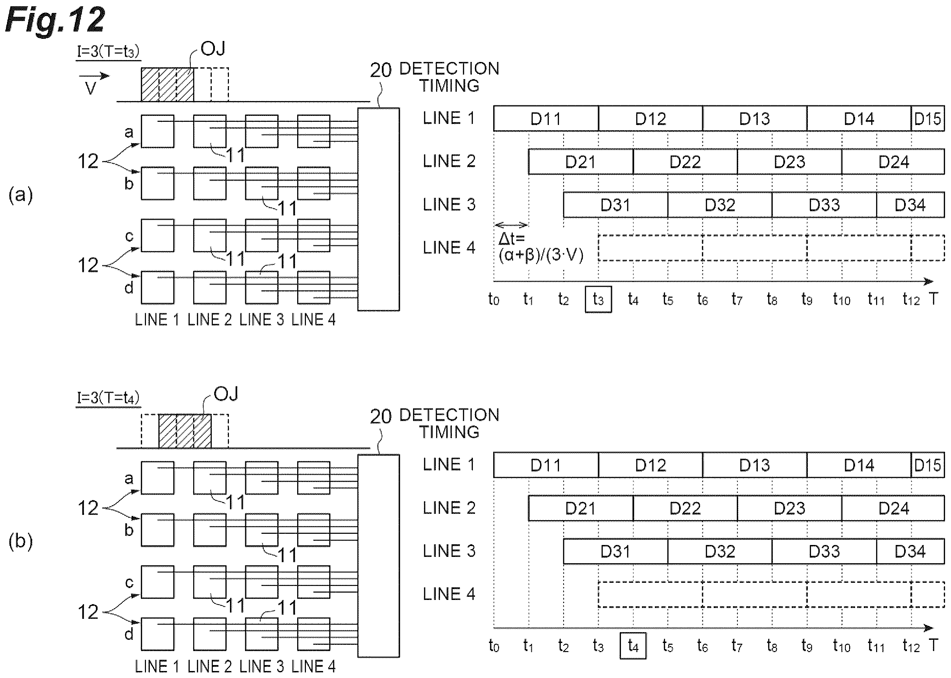

FIGS. 12 to 15 are diagrams for explaining an operation when the pixel shift value I is 3. That is, when 3 is selected as the pixel shift value I in step S1, the X-ray image acquisition device 4 performs the following operation.

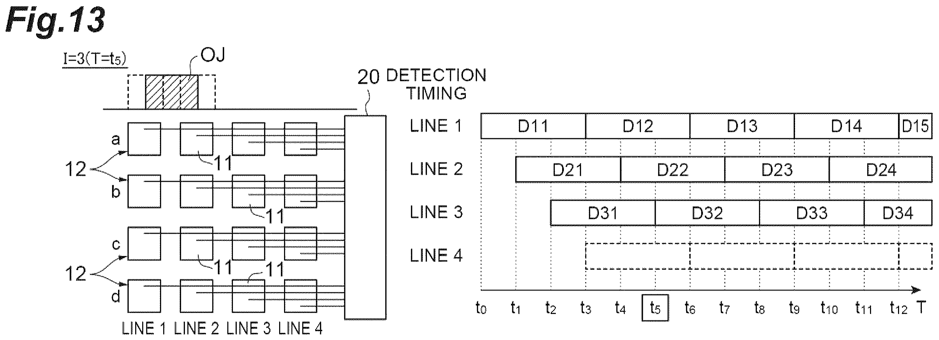

As shown in FIG. 12(a), when the pixel shift value I is 3, the detection interval ΔT is set to (α + β)/(3 × V). Then, as shown in FIGS. 12 and 13, detection (imaging) is performed at a detection interval ΔT that is shorter than that in the case of normal TDI operation (when the pixel shift value I is 1). For example, the detection result of each line in a detection period from time T = t2 to time T = t3 is output from the line 1 as output data D11, output from the line 2 as output data D21, and output from the line 3 as output data D31. When the pixel shift value I is 3, the output data from the line 4 may not be used to generate X-ray images. For example, the output data from the line 4 may not be read, or may be read but not used.

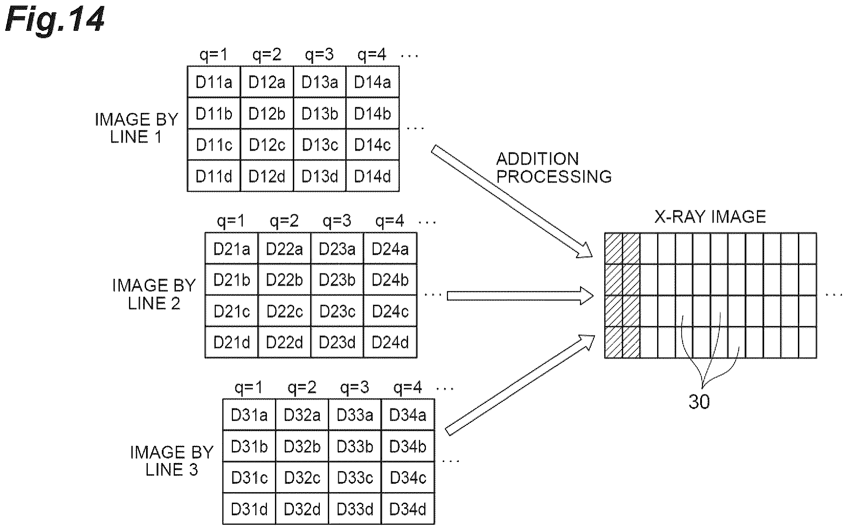

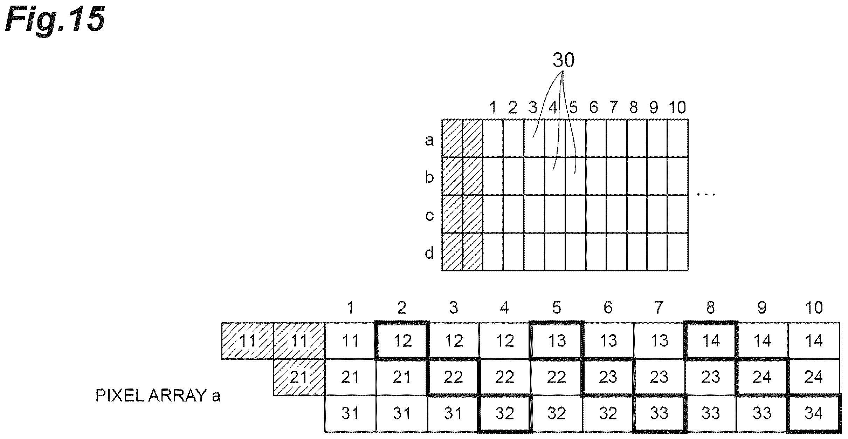

FIGS. 14 and 15 are diagrams for explaining addition processing when the pixel shift value I is 3. In the normal TDI operation described above, the output data from the lines 1 to 4 is X-ray output data from the same region in the object OJ, whereas when the pixel shift value I is 3, as shown on the left side of FIG. 14, the output data from the lines 1 to 3 is X-ray output data from regions of the object OJ that are shifted from each other in the first direction X1 by 1/3 of the width of the pixel portion 11 (1/3 pixel shift).

As shown in FIG. 14, the pieces of output data from the lines 1 to 3 are added together to generate an X-ray image of the object OJ having a plurality of pixel regions 30. FIG. 15 shows the value of each pixel region 30 corresponding to the pixel array a. For example, the value (pixel value) of the first pixel region 30 corresponding to the pixel array a is D11a + D21a + D31a. The value of the second pixel region 30 corresponding to the pixel array a is D12a + D21a + D31a. The value of the tenth pixel region 30 corresponding to the pixel array a is D14a + D24a + D34a. In addition, as shown by hatching in FIGS. 14 and 15, in a period from start time T = t0 to T = t2, the output data from all of the lines 1 to 3 is not acquired. For this reason, X-ray images are not generated for the range corresponding to the period. In addition, in FIG. 15, anomalous data is indicated by a thick frame. In the addition processing when the pixel shift value I is 3, anomalous data among the pieces of output data from the lines 1 to 3 may also be emphasized and added.

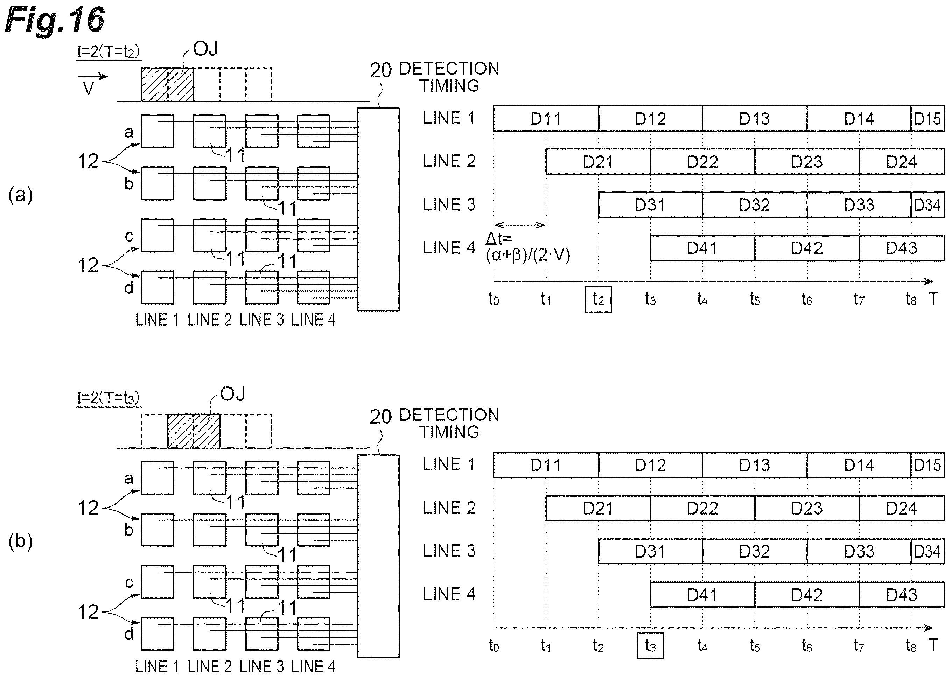

FIGS. 16 to 21 are diagrams for explaining an operation when the pixel shift value I is 2. That is, when 2 is selected as the pixel shift value I in step S1, the X-ray image acquisition device 4 performs the following operation.

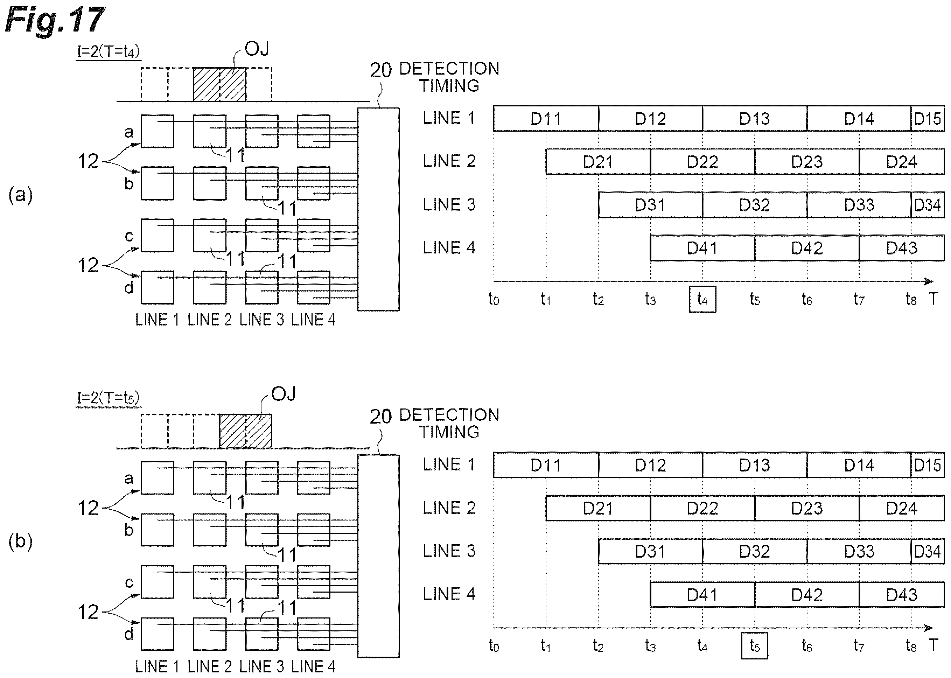

As shown in FIG. 16(a), when the pixel shift value I is 2, the detection interval ΔT is set to (α + β)/(2 × V). Then, as shown in FIGS. 16 and 17, detection (imaging) is performed at a detection interval ΔT that is shorter than that in the case of normal TDI operation (when the pixel shift value I is 1). For example, the detection result of each line in a detection period 1 from time T = t1 to time T = t2 is output from the line 1 as output data D11 and output from the line 2 as output data D21.

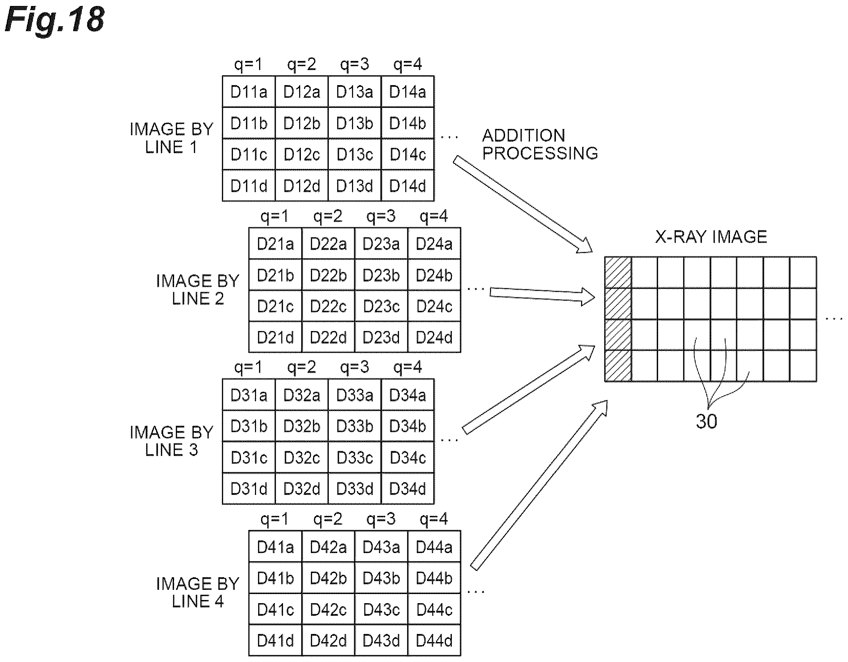

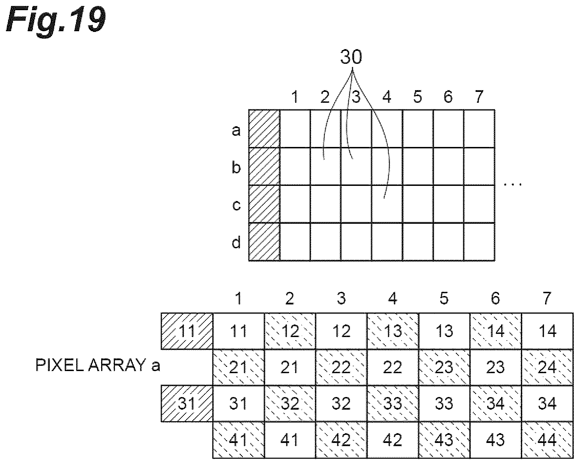

FIGS. 18 and 19 are diagrams for explaining a first example of the addition processing when the pixel shift value I is 2. In the normal TDI operation described above, the output data from the lines 1 to 4 is X-ray output data from the same region of the object OJ, whereas when the pixel shift value I is 2, as shown on the left side of FIG. 18, the output data from the lines 1 and 3 and the output data from the lines 2 and 4 are X-ray output data from regions of the object OJ that are shifted from each other in the first direction X1 by 1/2 of the width of the pixel portion 11 (1/2 pixel shift).

As shown in FIG. 18, in the first example, the pieces of output data from the lines 1 to 4 are added together to generate an X-ray image of the object OJ having a plurality of pixel regions 30. FIG. 19 shows the value of each pixel region 30 corresponding to the pixel array a. For example, the value (pixel value) of the first pixel region 30 corresponding to the pixel array a is D11a + D21a + D31a + D41a. The value of the second pixel region 30 corresponding to the pixel array a is D12a + D21a + D32a + D41a. The value of the seventh pixel region 30 corresponding to the pixel array a is D14a + D24a + D34a + D44a. In addition, as shown by hatching in FIGS. 18 and 19, in a period from start time T = t0 to T = t1, the output data from all of the lines 1 to 4 is not acquired. For this reason, X-ray images may not be generated for the range corresponding to the period. In addition, in FIG. 19, anomalous data is indicated by dashed hatching. In the addition processing when the pixel shift value I is 2, the anomalous data among the pieces of output data from the lines 1 to 4 may also be emphasized and added. For example, the value of the first pixel region 30 corresponding to the pixel array a may be D11a + nD21a + D31a + nD41a.

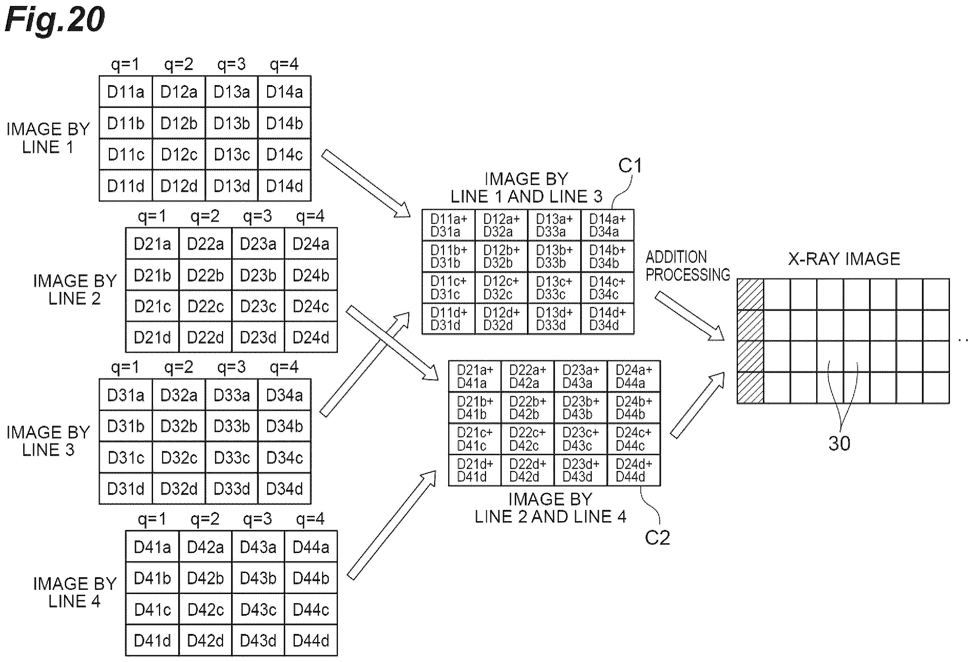

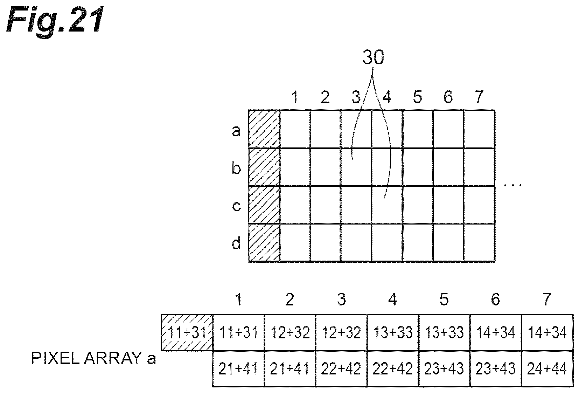

FIGS. 20 and 21 are diagrams for explaining a second example of the addition processing when the pixel shift value I is 2. In the second example, first data C1 is generated by adding the output data from the lines 1 and 3, which are X-ray output data from the same region of the object OJ, and second data C2 is generated by adding the output data from the lines 2 and 4, which are X-ray output data from the same region of the object OJ. Then, the first data C1 and the second data C2 are added together to generate an X-ray image. In this case, as shown in FIG. 21, the value of the first pixel region 30 corresponding to the pixel array a is a value obtained by adding (D11a + D31a) of the first data C1 and (D21a + D41a) of the second data C2. In the first and second examples, the values of the respective pixel regions 30 in the generated X-ray images are the same.

### [Processing unit]

FIG. 22 is a diagram showing a first example of the configuration of the processing unit 22. In the first example, the processing unit 22 is configured by one addition unit 51. The processing unit 22 includes an amplifier array 52, an ADC (Analog-to-Digital converter) array 53, an emphasis processing unit 54, and an addition memory 55. The amplifier array 52 includes M (four in this example) charge amplifiers connected to the M pixel arrays 12, respectively, and converts the charge signals output from the pixel portions 11 of the corresponding pixel arrays 12 into voltage signals. The ADC array 53 includes M AD converters connected to the M charge amplifiers, respectively, and performs A/D conversion to convert the voltage signals output from the corresponding charge amplifiers into digital values. The emphasis processing unit 54 is a circuit element for performing the emphasis processing described above, and is connected between the ADC array 53 and the addition memory 55. The emphasis processing unit 54 may be omitted. The addition memory 55 includes a plurality of storage areas, and stores digital values corresponding to the output data from each pixel portion 11. Through the processing unit 22 in the first example, it is possible to perform the addition processing described above.

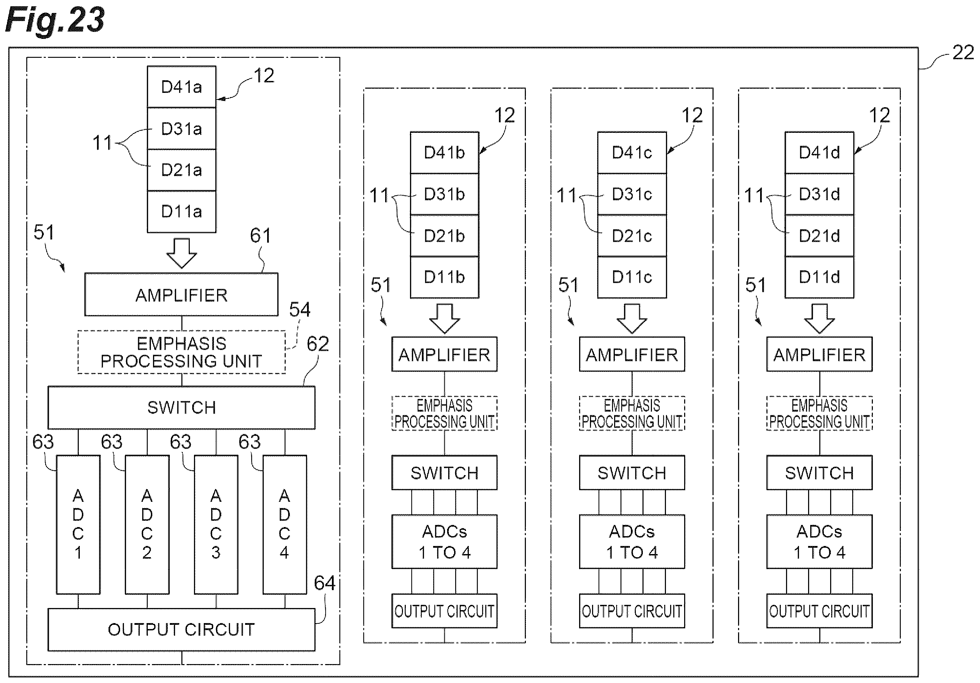

FIG. 23 is a diagram showing a second example of the configuration of the processing unit 22. In the second example, the processing unit 22 includes M (four in this example) addition units 51 connected to the M pixel arrays 12, respectively. Each of the addition units 51 includes a charge amplifier 61, an emphasis processing unit 54, a switching element 62, N AD converters 63, and an output circuit 64. The charge amplifier 61 converts the charge signals output from the pixel portions 11 of the pixel array 12 into voltage signals. The charge amplifier 61 may be an amplifier array including M charge amplifiers. The emphasis processing unit 54 is connected between the charge amplifier 61 and the switching element 62. The emphasis processing unit 54 may be omitted. The switching element 62 is connected between the charge amplifier 61 and the N AD converters 63, and switches the connection state between the charge amplifier 61 and the N AD converters 63. The AD converter 63 converts the voltage signal, which is output from the charge amplifier 61 connected through the switching element 62, into a digital value. The output circuit 64 outputs the signal from the AD converter 63 to the outside. Through the processing unit 22 in the second example, it is also possible to perform the addition processing described above.

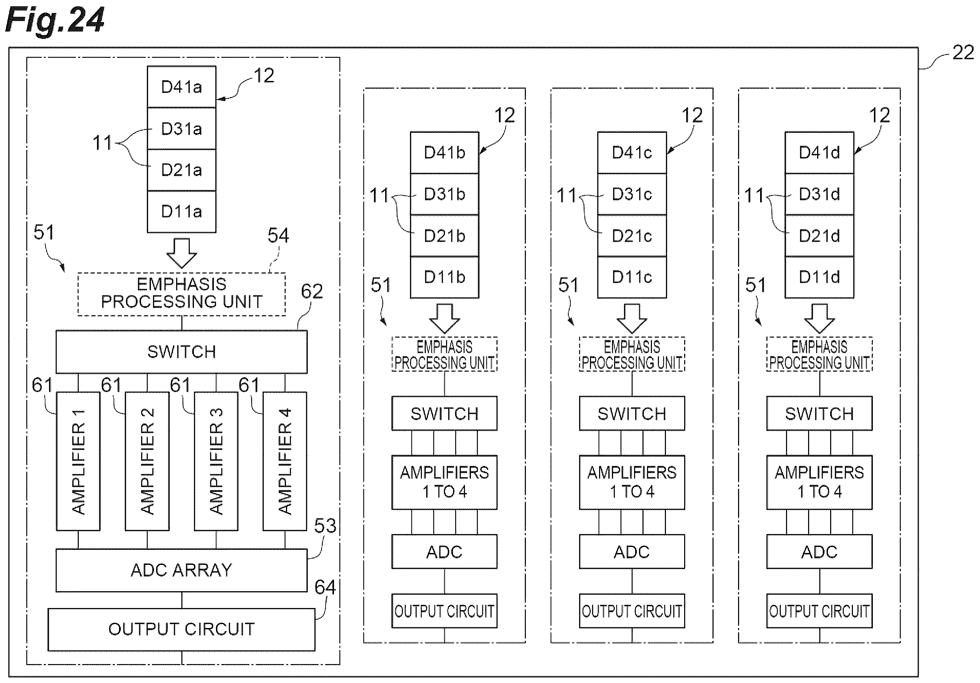

FIG. 24 is a diagram showing a third example of the configuration of the processing unit 22. In the third example, the processing unit 22 includes M (four in this example) addition units 51 connected to the M pixel arrays 12, respectively. Each addition unit 51 includes an emphasis processing unit 54, a switching element 62, N charge amplifiers 61, an ADC array 53, and an output circuit 64. The emphasis processing unit 54 is connected between the charge amplifier 61 and the switching element 62. The emphasis processing unit 54 may be omitted. The switching element 62 is connected between the N pixel portions 11 and the N charge amplifiers 61, and switch the connection state between the N pixel portions 11 and the N charge amplifiers 61. The ADC array 53 includes N AD converters connected to the N charge amplifiers 61, respectively, and converts the voltage signals output from the corresponding charge amplifiers 61 into digital values. The output circuit 64 outputs the signal from the ADC array 53 to the outside. Through the processing unit 22 in the third example, it is also possible to perform the addition processing described above.

### [Function and effect]

In the X-ray image acquisition device 4, in each of the M pixel arrays 12, the N pixel portions 11 sequentially detect X-rays at a predetermined detection interval ΔT. The detection interval ΔT is a value (α + β)/(I × V) obtained by dividing the basic value (α + β)/V, which is obtained by dividing the arrangement pitch (α + β) of the N pixel portions 11 by the reference speed V corresponding to the movement speed V1 of the object OJ, by the pixel shift value I. That is, the detection interval ΔT can be set based on the arrangement pitch (α + β) of the N pixel portions 11, the movement speed V1 of the object OJ, and the pixel shift value I. When the pixel shift value I is an integer of 2 or more and N or less, the resolution of the X-ray image can be increased by generating an X-ray image of the object OJ based on data detected at a detection interval ΔT shorter than the basic value. In addition, when the positions of two pixel arrays are shifted from each other as in Patent Literature 1 described above, it is possible to increase the resolution, but the resolution cannot be changed. Therefore, the degree of freedom (flexibility) in acquiring an image is low. In contrast, in the X-ray image acquisition device 4, the detection interval ΔT can be changed by changing the pixel shift value I, and the resolution of the X-ray image can be increased to a level according to the pixel shift value I. Therefore, it is possible to improve the degree of freedom in image acquisition. In addition, when acquiring an X-ray image, the resolution of the object OJ in its movement direction tends to decrease due to blurring. However, in the X-ray image acquisition device 4, since the resolution in the first direction X1 can be increased by shortening the detection interval ΔT of the N pixel portions 11 aligned along the first direction X1, it is possible to suitably increase the resolution of the acquired image. Details of the blur will be described later. As described above, according to the X-ray image acquisition device 4, it is possible to improve the degree of freedom in image acquisition and increase the resolution of the acquired image.

The pixel shift value I is selected from integers of 1 or more and N or less according to the input. In this manner, it is possible to further improve the degree of freedom in image acquisition.

The control unit 21 is configured to be able to set the detection interval ΔT to the basic value. That is, in the above example, 1 can be selected as the pixel shift value I, and the normal TDI operation can be selected. In this manner, it is possible to further improve the degree of freedom in image acquisition.

For example, when there are N pixel portions 11, assuming that the pixel shift value I is N, the resolution can be increased by N times. However, since the detection interval ΔT is 1/N in the case of normal TDI operation (N = 1), is not possible to improve the SNR (signal-to-noise ratio) and the CNR (contrast-to-noise ratio) even if addition is performed N times. Assuming that the pixel shift value I is 1, integration is performed N times while keeping the detection interval ΔT = (α + β)/V of the normal TDI operation. Therefore, the SNR can be improved, but the resolution cannot be increased. By making it possible to select the pixel shift value I from 1 to N or 2 to N, it is possible to adjust the resolution and the contrast. For example, when high resolution is required, the pixel shift value I can be set to a large value, whereas when the SNR is likely to be low due to reasons such as the thickness of the object OJ being large, the pixel shift value I can be set to a small value, thereby increasing the contrast and improving the SNR. In addition, the pixel shift value I may be changed based on the information of the object OJ, such as the type or thickness of the object OJ. In addition, the pixel shift value I may be changed according to imaging conditions such as the output of the X-ray source 2, the movement speed V1 of the object OJ, and the inspection recipe. The pixel shift value I may be set based on information obtained by imaging the object OJ. For example, a threshold value for the SNR or CNR may be set, and the pixel shift value I may be set using the threshold value.

For example, in the case of N = 12, by setting the pixel shift value I to 2, it is possible to substantially realize six-stage addition and double resolution. By setting the pixel shift value I to 3, it is also possible to substantially realize four-stage addition and three-fold resolution. By setting the pixel shift value I to 4, it is also possible to substantially realize three-stage addition and four-fold resolution. By setting the pixel shift value I to 5, it is also possible to substantially realize two-stage addition and five-fold resolution. In this case, there is a period with no exposure or a period that is not used as data. By setting the pixel shift value I to 12 and performing addition step by step, it is also possible to realize twelve-fold resolution.

Generally, in an image sensor, the pixel size (size of a pixel) is related to the saturation charge amount, and the saturation charge amount decreases as the pixel size decreases. That is, there is a trade-off relationship between the saturation charge amount and the resolution. In contrast, in the X-ray image detection method according to the embodiment, it is possible to increase the resolution without reducing the pixel size. Therefore, it is possible to achieve both a saturation charge amount and resolution. In addition, in a CdTe detector, the pixel size tends to increase as the energy discrimination performance improves. For this reason, it is difficult to reduce the pixel size while maintaining the energy discrimination performance. In contrast, in the X-ray image acquisition device 4 according to the embodiment, it is possible to increase the resolution without reducing the pixel size, thereby making it possible to achieve both. In addition, in the case of SiPM, it is difficult to reduce the pixel size compared to other sensors. However, in the X-ray image acquisition device 4 according to the embodiment, it is possible to increase the resolution regardless of the pixel size. Therefore, it is possible to increase the resolution even when the pixel unit 10 is formed using the SiPM.

In the X-ray image acquisition device 4, the processing unit 22 generates an X-ray image having a plurality of pixel regions 30 by processing the output data, which is the detection results of the N pixel portions 11, so that the pieces of output data transmitted through the same region of the object OJ are superimposed on each other. When generating an X-ray image, the processing unit 22 may process the output data so that, among the pieces of output data forming one pixel region 30, output data that is different from the output data forming the pixel region 30 adjacent to the one pixel region 30 is emphasized more than output data other than the different output data (emphasis processing). Here, the adjacent pixel region 30 is the pixel region 30 adjacent to the one pixel region 30 on a side where the detection timing in a direction corresponding to the first direction X1 is earlier. When performing emphasis processing, it is possible to increase the resolution of the X-ray image while suppressing a decrease in the brightness of the X-ray image.

The X-ray image acquisition system 1 includes the X-ray image acquisition device 4, the X-ray source 2 that outputs X-rays, and the transport unit 3 that transports the object OJ along the first direction X1. According to the X-ray image acquisition system 1, for the reasons described above, it is possible to improve the degree of freedom in image acquisition and increase the resolution of the acquired image.

### [Modification examples]

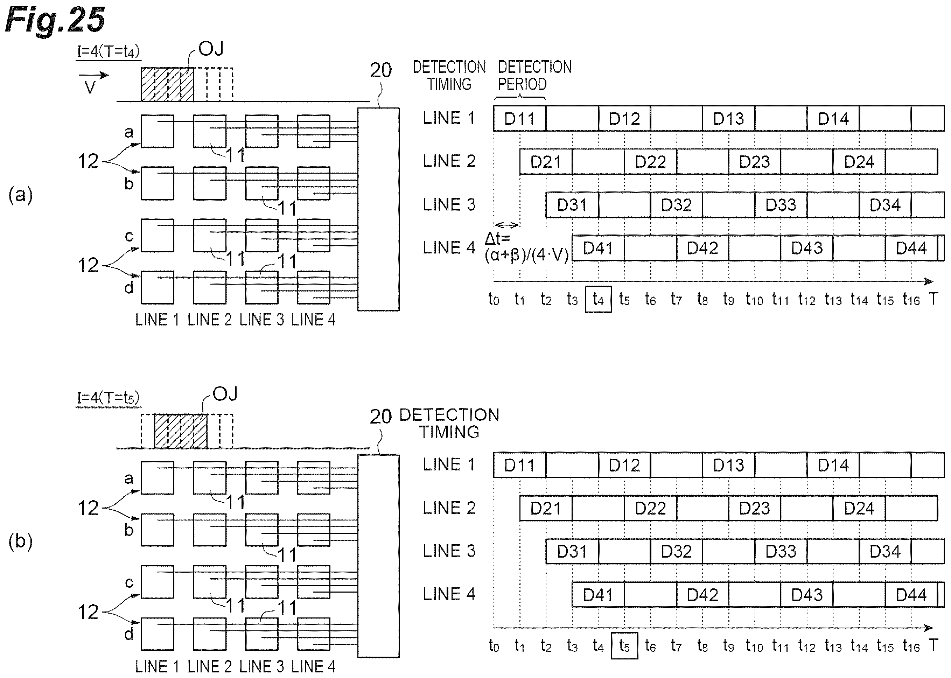

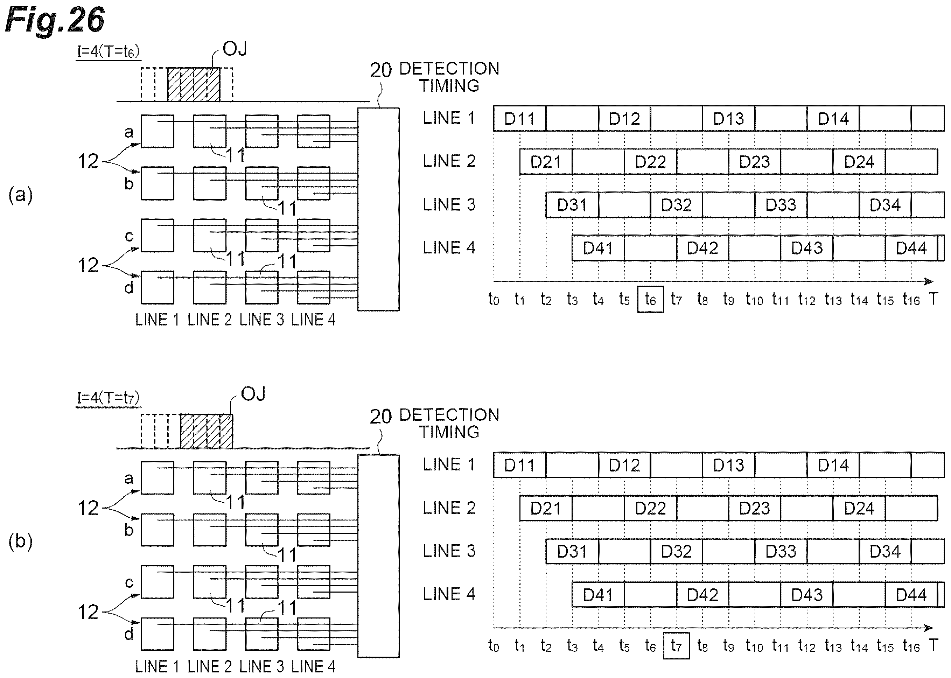

FIGS. 25 and 26 are diagrams for explaining the operation of the first modification example. In the first modification example, the control unit 21 controls the detection of X-rays by the pixel unit 10 so that each of the N pixel portions 11 detects X-rays only for a period shorter than the basic value (α + β)/V. That is, in the examples shown in FIGS. 8 and 9, each pixel portion 11 detects X-rays throughout each frame, but as in the examples shown in FIGS. 25 and 26, each pixel portion 11 may detect X-rays only for half the period of the entire frame. In a period during which X-rays are not detected, the charge generated in the pixel portion 11 may be removed by, for example, an electronic shutter.

In the first modification example as well, as in the above embodiment, it is possible to improve the degree of freedom in image acquisition and increase the resolution of the acquired image. In addition, since each of the N pixel portions 11 detects X-rays only for a period shorter than the basic value (α + β)/V, it is possible to further increase the resolution of the X-ray image.

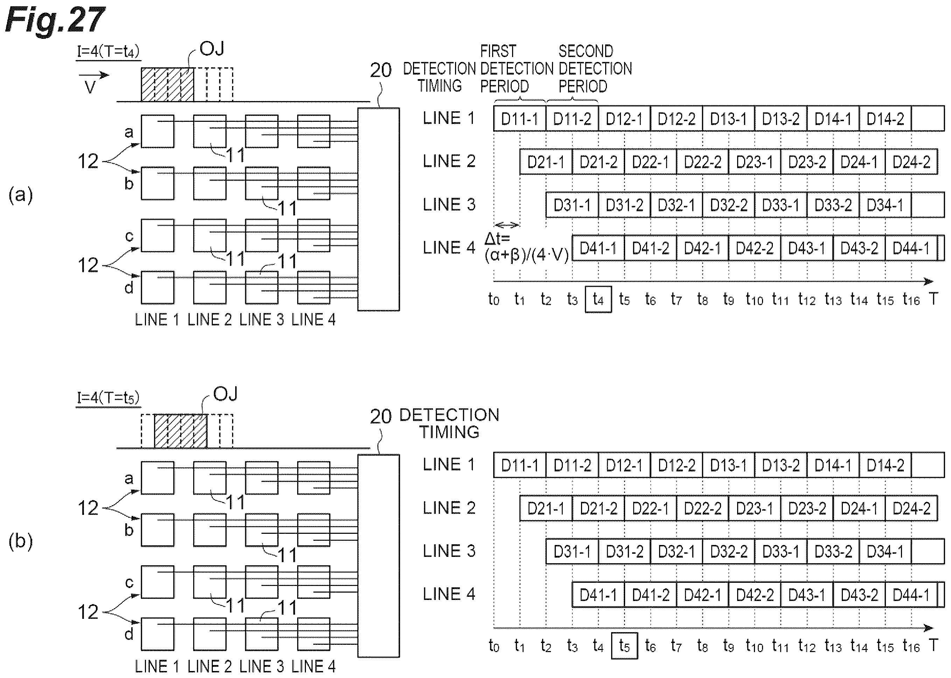

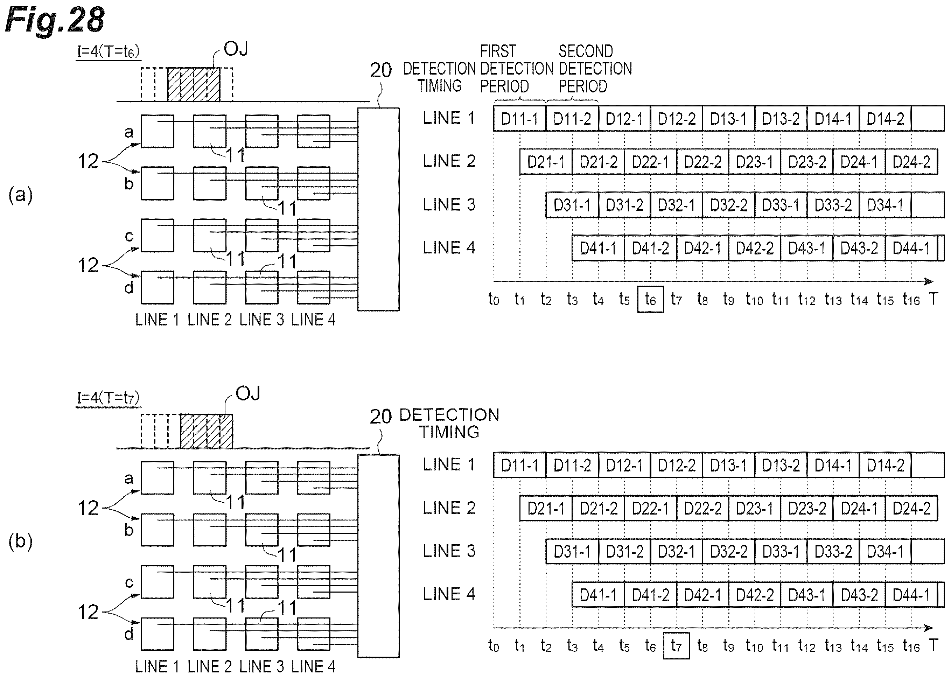

FIGS. 27 and 28 are diagrams for explaining the operation of the second modification example. In the second modification example, the control unit 21 controls the detection of X-rays by the pixel unit 10 so that each of the N pixel portions 11 detects X-rays multiple times during one frame corresponding to the basic value (α + β)/V. That is, in the examples shown in FIGS. 8 and 9, each pixel portion 11 detects X-rays once during one frame, but as in the examples shown in FIGS. 27 and 28, each pixel portion 11 may detect X-rays twice during one frame, for example. In the examples of FIGS. 27 and 28, each pixel portion 11 detects X-rays twice during one frame, in the first detection period and the second detection period.

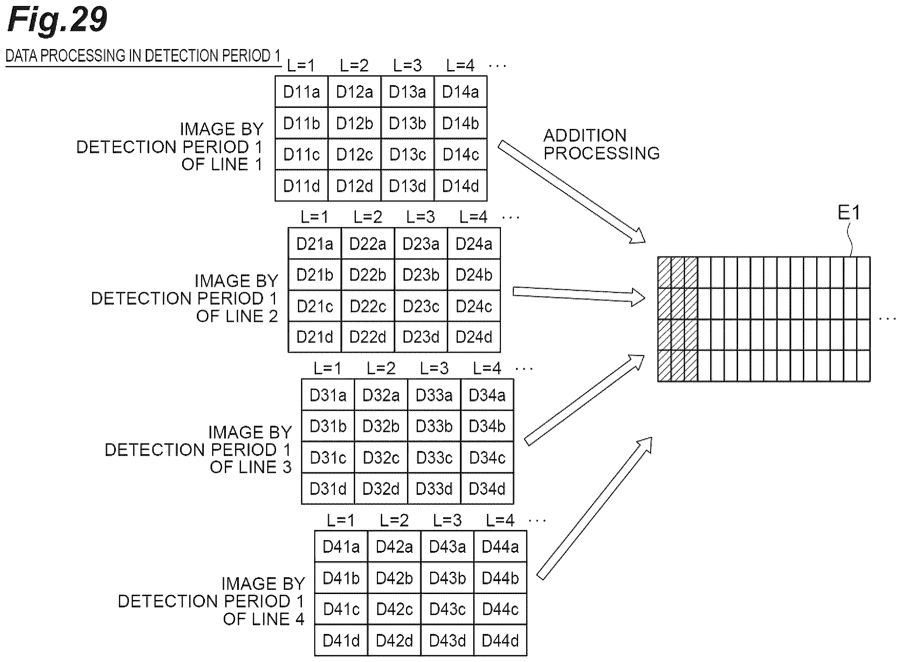

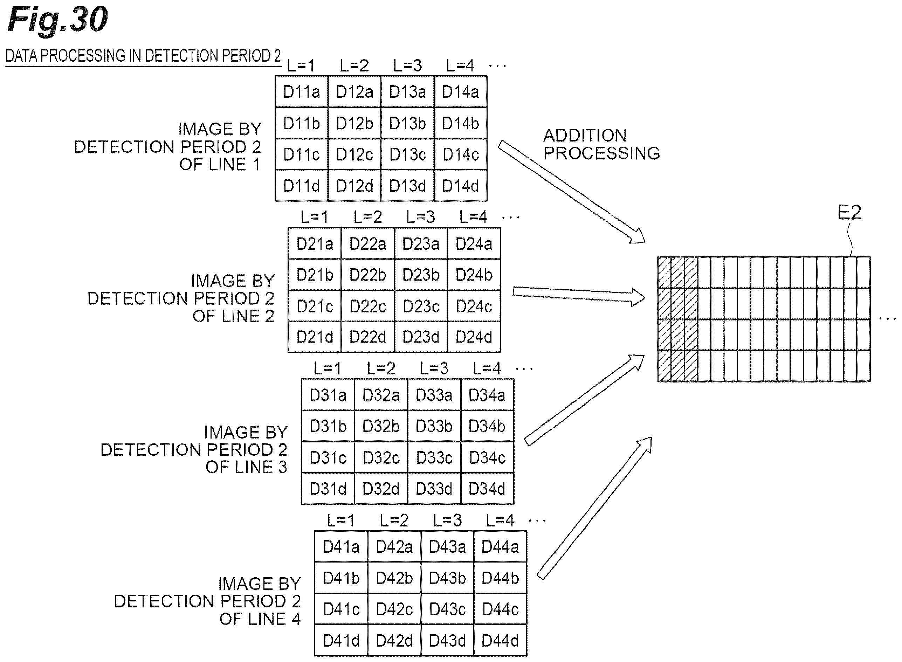

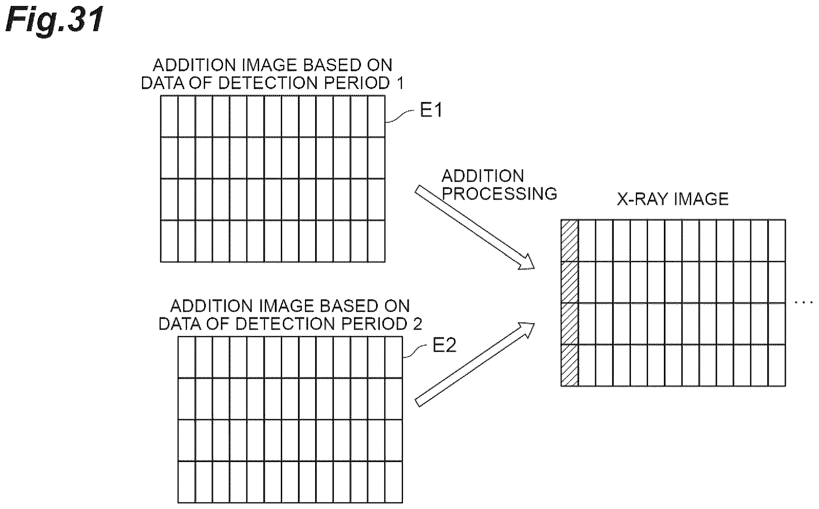

FIGS. 29 to 31 are diagrams for explaining the addition processing in the case of the second modification example. For example, as shown in FIG. 29, the output data in the first detection period is added to generate first data E1, and as shown in FIG. 30, the output data in the second detection period is added to generate second data E2. Then, as shown in FIG. 31, the first data E1 and the second data E2 are added together to generate an X-ray image. In addition, although the symbol "-1" added to the end of each piece of data is omitted in FIG. 29, each piece of data shown in FIG. 29 is output data in the first detection period. Similarly, in FIG. 30, the symbol "-2" added to the end of each piece of data is omitted, but each piece of data shown in FIG. 30 is output data in the second detection period.

In the second modification example as well, as in the above embodiment, it is possible to improve the degree of freedom in image acquisition and increase the resolution of the acquired image. In addition, since each of the N pixel portions 11 detects X-rays multiple times during one frame corresponding to the basic value (α + β)/V, it is possible to increase the resolution of the X-ray image while suppressing a decrease in the brightness of the X-ray image. In addition, X-rays may be detected n times (n is an integer of 2 or more) during one frame, without being limited to detecting X-rays twice during one frame. In this case, the length of the detection period may be set to 1/n or less of the basic value.

### [Additional explanation]

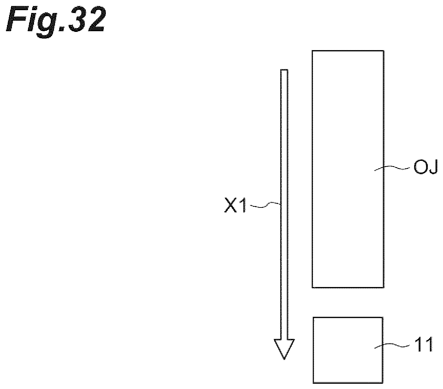

The X-ray image acquisition method according to the embodiment will be further described with reference to FIGS. 32 to 39. As shown in FIG. 32, it is assumed that the pixel portion 11 acquires X-rays from the object OJ moving along the first direction X1. In this assumed example, the size of the pixel portion 11 is 0.4 mm × 0.4 mm, and the object OJ moves 0.4 mm during the imaging of one line.

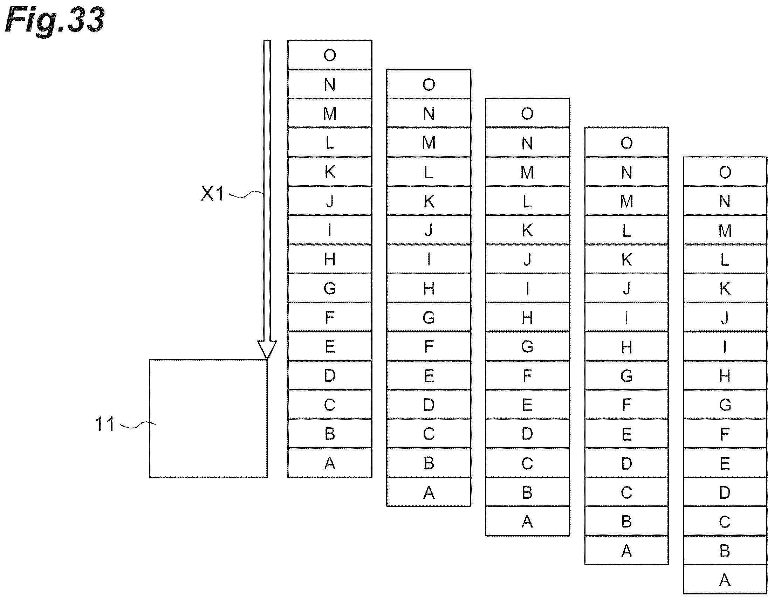

As shown in FIG. 33, the object OJ is virtually divided into blocks A to O in units of 0.1 mm along the first direction X1. At the start of imaging, the blocks A to D are imaged. After moving 0.1 mm, the blocks B to E are imaged. After moving 0.2 mm, the blocks C to F are imaged. After moving 0.3 mm, the blocks D to G are imaged. After moving 0.4 mm, the blocks E to H are imaged. In this manner, the imaging of one line ends. The output data of the first line is 0.5A + 1.5B + 2.5C + 3.5D + 3.5E + 2.5F + 1.5G + 0.5H. Here, for example, 0.5A means that, assuming that the data corresponding to the entire length of each block is one unit, data from the block A corresponding to the half, that is, 0.5 unit is included. The reason why the data from the block A corresponds to 0.5 unit is that, because the object OJ moves, data is acquired only from half of the region of the block A. The output data of the second line is 0.5E + 1.5F + 2.5G + 3.5H + 3.5I + 2.5J + 1.5K + 0.5L.

In this manner, the output data of the first line includes data for the 0.8 mm regions of the blocks A to H. As described above, this is the reason why the resolution in the movement direction of the object OJ decreases due to blurring when acquiring an X-ray image. That is, the imaging range during the imaging period (the amount of movement of the object OJ per line) is determined by the movement speed of the object OJ and the width of the pixel portion 11 (pixel height). Therefore, transport blur occurs in the first direction X1, which is the movement direction (transport direction), and the resolution in the first direction X1 tends to be lower than the resolution in the second direction X2.

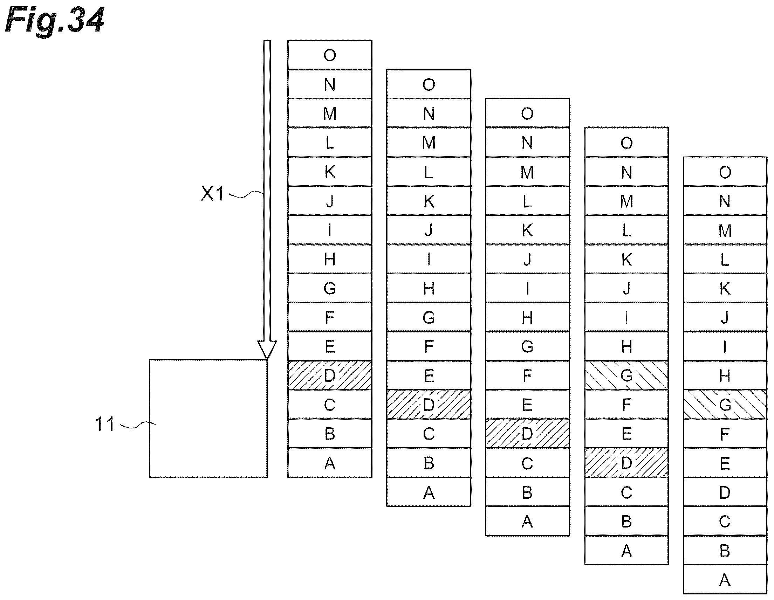

A case will be considered in which the presence or absence of foreign matter in the object OJ is inspected based on X-ray images. As shown in FIG. 34, when there is foreign matter in the block D, the brightness contrast is relatively large. For example, assuming that the transmittance (X-ray transmittance) of the block D is 0% due to the presence of foreign matter and the transmittance of the other blocks is 100%, the brightness when there is foreign matter in the block Dis 78% of the brightness when there is no foreign matter in the object OJ. That is, as described above, the output data of the first line is 0.5A + 1.5B + 2.5C + 3.5D + 3.5E + 2.5F + 1.5G + 0.5H, and assuming that the data corresponding to the entire length of each block is one unit, 16 units of data are included. Assuming that the contribution of the block D (3.5 units) is 0, 12.5 units of data are included, which corresponds to 12.5/16 ≒ 78%.

On the other hand, when there is foreign matter in the block G, the contrast is relatively small. For example, assuming that the transmittance of the block G is 0% and the transmittances of the other blocks are 100%, the brightness when there is foreign matter in the block G is 90% of the brightness when there is no foreign matter in the object OJ (14.5/16 ≒ 91%). Thus, the detection result changes depending on the imaging timing. Hereinafter, similarly, the brightness when there is foreign matter in a certain region will be expressed as a ratio to the brightness when there is no foreign matter in the object OJ.

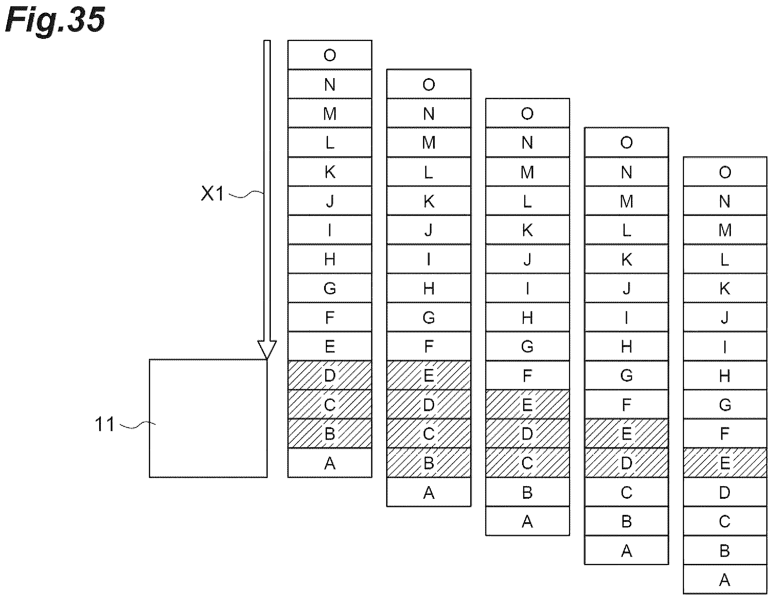

As shown in FIG. 35, when there is foreign matter in the blocks B to E, considering in the same manner as above, the brightness is 31% (5/16 ≒ 31%). On the other hand, when there is foreign matter in the blocks E to H, the brightness is 50% (8/16 = 50%). In this manner, even when there is foreign matter with the same size, the detection result will change depending on the imaging timing. More specifically, if there is foreign matter across the boundary of the pixel portion 11, the contrast is reduced.

In contrast, as in the case where the pixel shift value I is set to an integer of 2 or more and N or less in the X-ray image acquisition method according to the above embodiment, the contrast can be increased by generating an X-ray image using output data of X-rays from regions of the object OJ that are shifted from each other in the first direction X1 by 1/I of the width of the pixel portion 11.

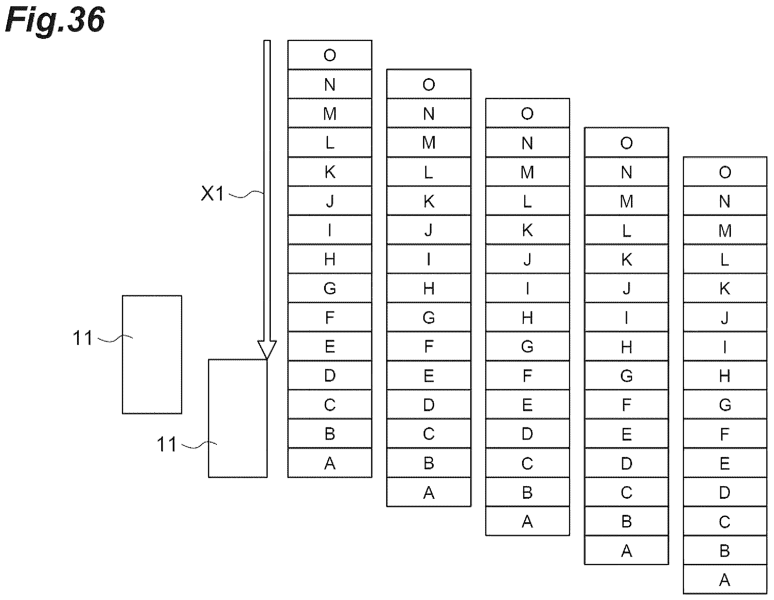

As shown in FIG. 36, a case will be considered in which two pixel portions 11 are arranged so as to be shifted from each other by 1/2 of the width of the pixel portion 11 (1/2 pixel shift). This corresponds to the case where the pixel shift value I is 2 in the above embodiment. In this case, the output data of the first line of the first pixel portion 11 is 0.5A + 1.5B + 2.5C + 3.5D + 3.5E + 2.5F + 1.5G + 0.5H, and the output data of the first line of the second pixel portion 11 is 0.5C + 1.5D + 2.5E + 3.5F + 3.5G + 2.5H + 1.5I + 0.5J.

In the example of FIG. 36, when there is foreign matter in the block G, the brightness is 84% (27/32 ≒ 84%). Thus, compared to 90% when imaging by one pixel portion 11 is performed as described above, the contrast is increased. In addition, in the example of FIG. 36, when there is foreign matter in the blocks E to H, the brightness is 37.5% (12/32 ≒ 37.5%). Thus, compared to 50% when imaging by one pixel portion 11 is performed as described above, the contrast is increased. Therefore, by setting the pixel shift value I to an integer of 2 or more and N or less, it is possible to detect foreign matter satisfactorily.

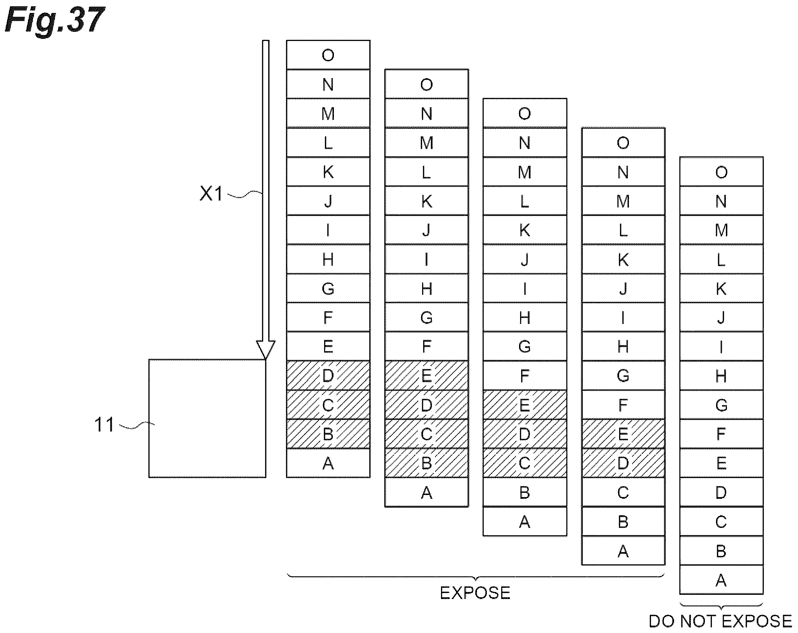

As shown in FIG. 37, instead of performing exposure (detection) over the entire one frame, it is conceivable to perform exposure only during a period of a part of one frame. The example of FIG. 37 corresponds to the first modification example described above. In the example of FIG. 37, when the object OJ moves 0.4 mm, exposure is performed in a period during which the object OJ moves 0.3 mm, and exposure is not performed in a period during which the object OJ moves remaining 0.1 mm. In this case, the output data of the first line is 0.5A + 1.5B + 2.5C + 3D + 2.5E + 1.5F + 0.5G. When there is foreign matter in the block D, the brightness is 75%. When there is foreign matter in the block G, the brightness is 96%. When there is foreign matter in the blocks B to E, the brightness is 21%. When there is foreign matter in the blocks E to H, the brightness is 63%.

In this case as well, as in the case where the pixel shift value I is set to an integer of 2 or more and N or less in the X-ray image acquisition method according to the above embodiment, the contrast can be increased by generating an X-ray image using X-ray output data from regions of the object OJ that are shifted from each other in the first direction X1 by 1/I of the width of the pixel portion 11.

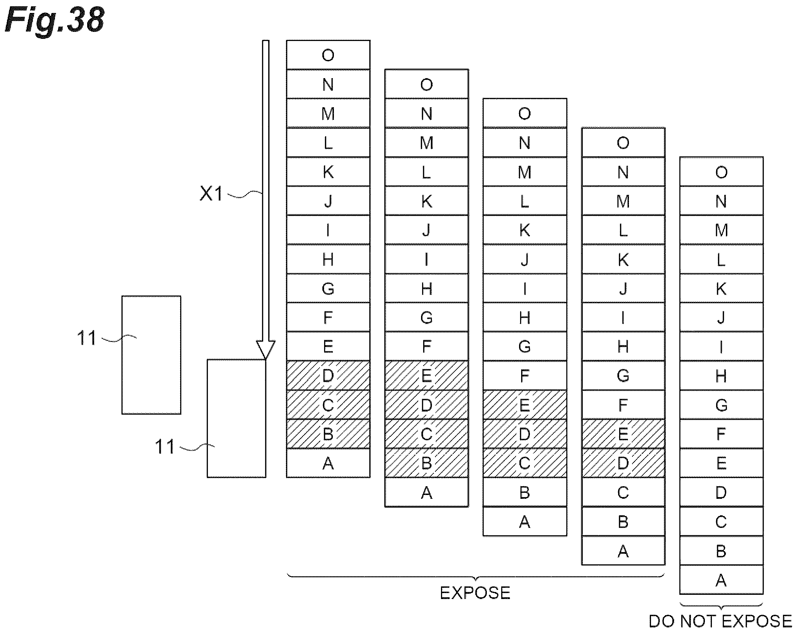

As shown in FIG. 38, a case will be considered in which two pixel portions 11 are arranged so as to be shifted from each other by 1/2 of the width of the pixel portion 11 as in the case of FIG. 36. In this case, the output data of the first line of the first pixel portion 11 is 0.5A + 1.5B + 2.5C + 3D + 2.5E + 1.5F + 0.5G, and the output data of the first line of the second pixel portion 11 is 0.5C + 1.5D + 2.5E + 3F + 2.5G + 1.5H + 0.5I.

In the example of FIG. 38, the brightness when there is foreign matter in the block G is 88%. Thus, compared to 96% when imaging by one pixel portion 11 is performed as described above, the contrast is increased. In addition, in the example of FIG. 38, when there is foreign matter in the blocks E to H, the brightness is 58%. Thus, compared to 63% when imaging by one pixel portion 11 is performed as described above, the contrast is increased. Therefore, by setting the pixel shift value I to an integer of 2 or more and N or less, it is possible to detect foreign matter satisfactorily. In particular, when exposure is performed only during a period of a part of one frame, it is possible to increase the contrast more effectively.

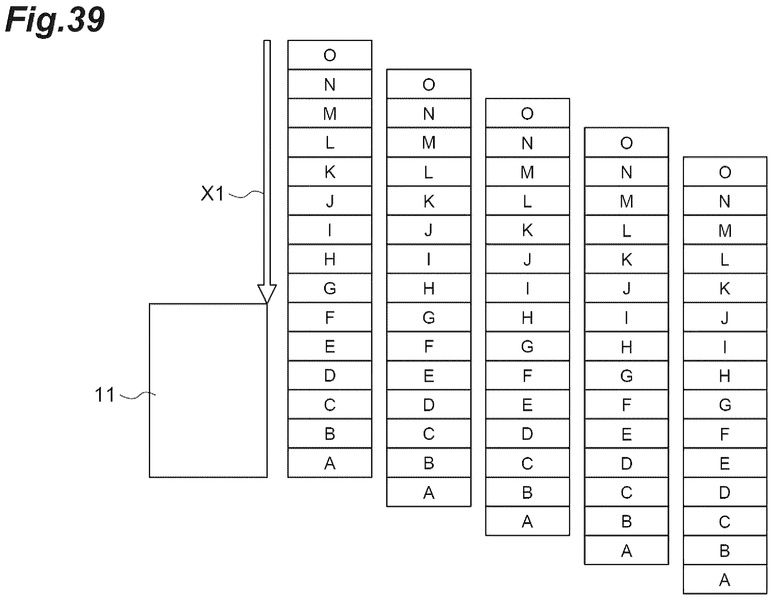

FIG. 39 shows an example of a case where the object OJ moves 0.4 mm during the imaging of one line when the pixel portion 11 is formed in a rectangular shape, the length (width) of the pixel portion 11 in the first direction X1 is 0.6 mm, and the length of the pixel portion 11 in the second direction X2 is 0.4 mm. In this case, the output data of the first line is 0.5A + 1.5B + 2.5C + 3.5D + 4E + 4F + 3.5G + 2.5H + 1.5I + 0.5J, and the output data of the second line is 0.5E + 1.5F + 2.5G + 3.5H + 4I + 4J + 3.5K + 2.5L + 1.5M + 0.5N. Thus, the data on the first line starts from the block A, and the data on the second line starts from the block E. When generating an X-ray image by setting the pixel shift value I to an integer of 2 or more and N or less, it is preferable that the data of the first line of the second pixel portion 11 start from the block C. Therefore, it is preferable to set the pixel shift amount based on the movement amount of the object OJ, rather than the size of the pixel portion 11.

### [Simulation results]

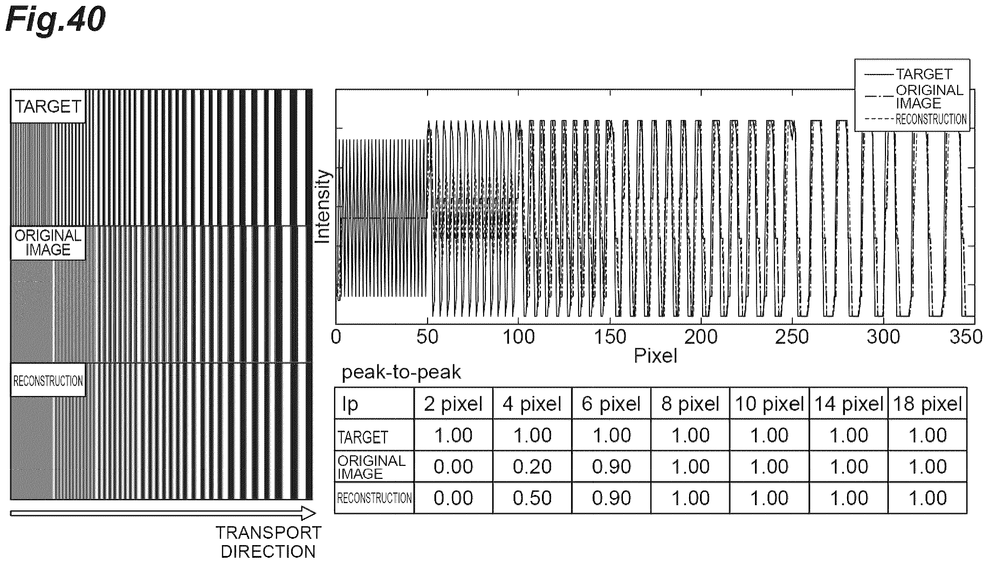

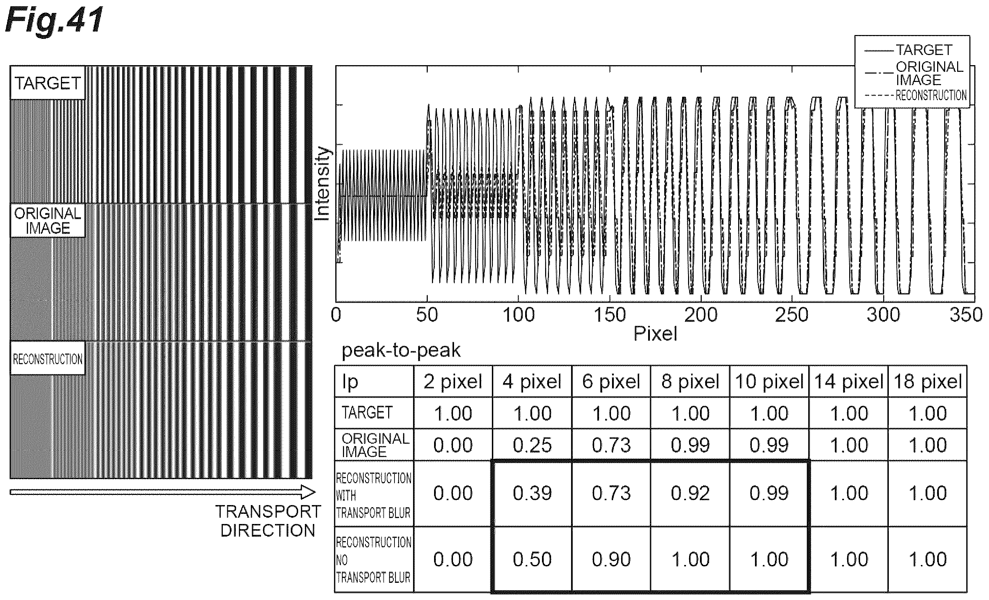

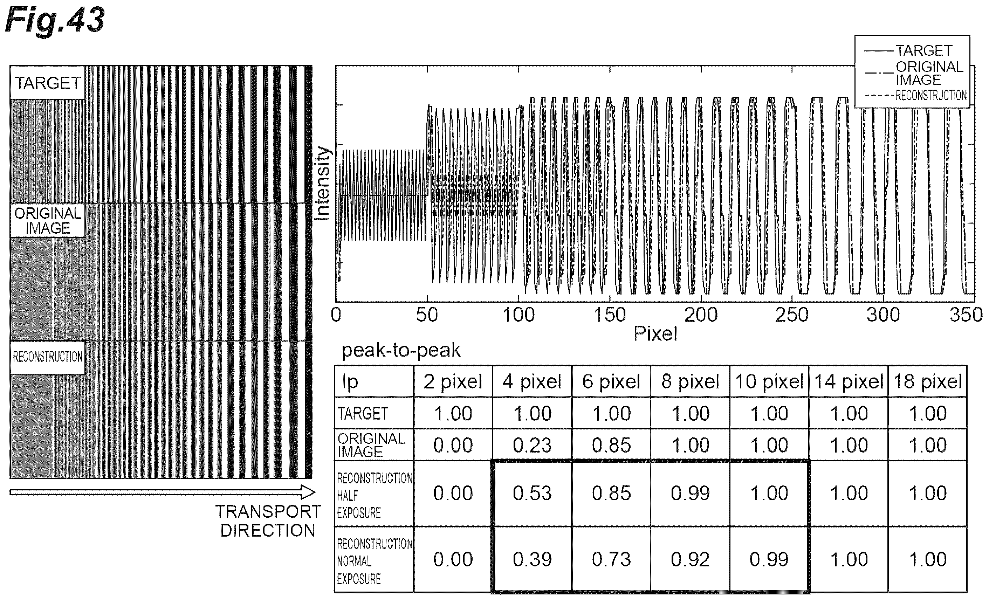

FIG. 40 is a diagram for explaining the first simulation result. In the first simulation, the sample resolution chart shown on the left side of FIG. 40 was analyzed. "Target" is a target image, "original image" is an image before reconstruction, and "reconstruction" is an image after reconstruction. The diagram on the upper right side of FIG. 40 shows the brightness value profile of the image shown on the left side of FIG. 40 in the transport direction. As shown in the brightness value profile, in the target image, the width (that is, the period) of each lp (line pair; a pair of a white line and a black line) changes every 50 pixels with the left end as 0 pixel. In addition, in the graph shown on the upper right side of FIG. 40, a predetermined offset value is added to the brightness value to make it easier to grasp the lower end of the amplitude. This also applies to the graphs shown on the upper right sides of FIGS. 41 and 43, which will be described later.

In this analysis, reconstruction was performed using the method described in FIGS. 7A and 7B of Patent Literature 1 described above. Specifically, two images acquired by shifting each other by half the pixel width were enlarged using the nearest neighbor method, and the images were added together with the pixels shifted from each other to reconstruct one image. In Patent Literature 1 described above, the images are enlarged in two directions perpendicular to each other. However, in this analysis, the images are enlarged in only one direction (transport direction) and added together. In addition, in this analysis, the effects of transport blur, scintillator blur, afterglow blur, shot noise, and readout noise are not taken into consideration.

The table on the lower right side of FIG. 40 shows normalized values obtained by dividing the amplitude of the brightness value at each lp by the amplitude of the brightness value of the target image. As shown in the table, by performing reconstruction, in a range where lp is 4 pixels, the amplitude of the original image is 0.20, whereas the amplitude of the reconstructed image is 0.50. This shows that the resolution can be increased by reconstructing one image from two images acquired by shifting each other by half the pixel width.

FIG. 41 is a diagram for explaining the second simulation result. The second simulation is different from the first simulation in that transport blur is taken into consideration in the analysis. As shown in the table on the lower right side of FIG. 41, when transport blur is taken into consideration, the count value is lower than when transport blur is not taken into consideration, and accordingly, the improvement rate of the resolution is reduced.

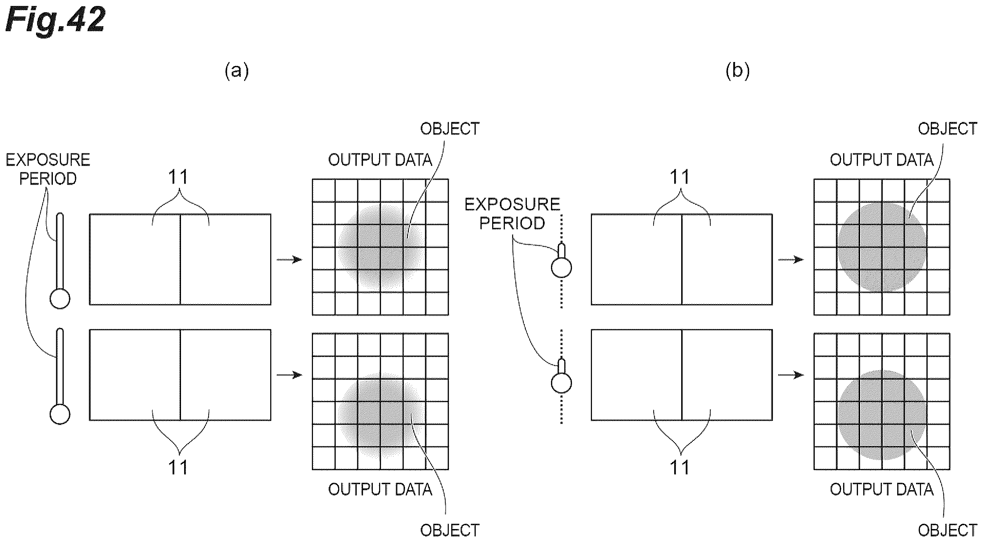

FIG. 42 is a diagram for explaining the shortening of the exposure period. Instead of performing exposure over the entire one frame as shown in FIG. 42(a), it is conceivable to perform exposure only during a period of a part of one frame. The shortening of the exposure period corresponds to the first modification example (FIGS. 25 and 26) and the example of FIG. 37 described above.

FIG. 43 is a diagram for explaining the third simulation result. The third simulation is different from the second simulation in that the exposure period is shortened to 1/2. As shown in the table on the lower right side of FIG. 43, when the exposure period is shortened to 1/2 (half exposure), the amplitude is larger than when the exposure period is not shortened (normal exposure). This shows that the resolution can be increased by shortening the exposure period.

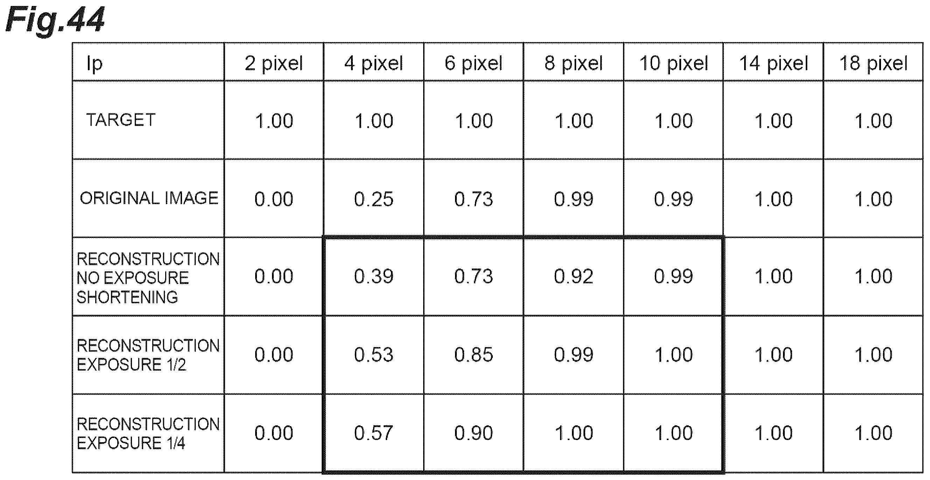

FIG. 44 is a diagram for explaining the additional simulations results. The bottom of the table in FIG. 44 shows the simulation results when the exposure period is shortened to 1/4. From the table in FIG. 44, it can be seen that the shorter the exposure period, the higher the resolution can be.

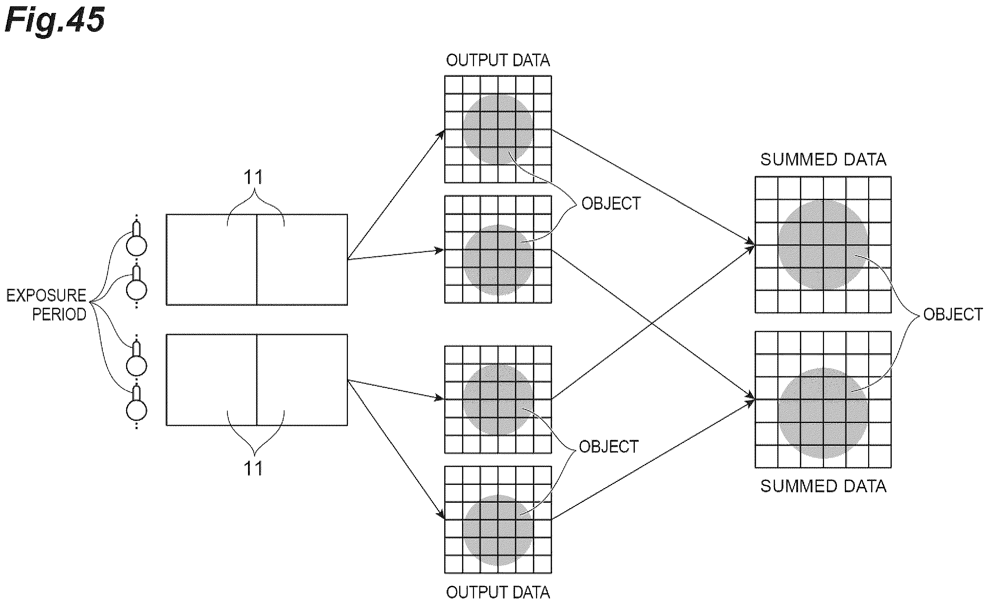

FIG. 45 is a diagram for explaining a modification example of the shortening of the exposure period. As shown in FIG. 45, in this modification example, each pixel portion 11 detects X-rays twice during one frame. This modification example corresponds to the second modification example (FIGS. 27 to 31) described above. In this modification example as well, as in the second modification example described above, the pieces of output data for each of the two exposure periods are summed to generate summed data, and two pieces of summed data obtained are further summed to generate an X-ray image. As described above, simply shortening the exposure period can suppress the effects of transport blur, but this may result in a decrease in brightness. However, in this modification example, the exposure time can be substantially increased. Therefore, it is possible to suppress the effects of transport blur while suppressing a decrease in brightness.

The present disclosure is not limited to the embodiment and their modification examples described above. In the above embodiment, the pixel shift value I can be selected from integers of 1 or more and N or less, but the pixel shift value I may also be selected from integers of 2 or more and N or less. In other words, the pixel shift value I may not be selectable as 1, and the normal TDI operation may be selectable. That is, the control unit 21 does not have to be configured to be able to set the detection interval ΔT to the basic value. The pixel shift value I does not necessarily have to be selectable from a plurality of values, but may be a fixed value (for example, N).

In the above embodiment, the M pixel arrays 12 are aligned along the second direction X2 perpendicular to the first direction X1. However, the M pixel arrays 12 may be aligned along a direction intersecting the first direction X1, or may be aligned along a direction intersecting the first direction X1 at an angle other than perpendicular. In each pixel array 12, the N pixel portions 11 may be aligned with their positions shifted from each other in the second direction X2 perpendicular to the first direction X1. In this case, it is possible to increase not only the resolution in the first direction X1 but also the resolution in the second direction X2.

### Reference Signs List

1: X-ray image acquisition system, 2: X-ray source, 10: pixel unit, 3: transport unit, 4: X-ray image acquisition device, 11: pixel portion, 12: pixel array, 21: control unit, 22: processing unit, 30: pixel region, I: pixel shift value, OJ: object, V: reference speed, V1: movement speed, X1: first direction, X2: second direction, ΔT: detection interval.

## Claims

1. An X-ray image acquisition device for acquiring an X-ray image of an object moving along a first direction, the device comprising:
a pixel unit comprising M (M is an integer of 2 or more) pixel arrays each comprising N (N is an integer of 2 or more) pixel portions for detecting X-rays, wherein the N pixel portions are aligned along the first direction and the M pixel arrays are aligned along a second direction intersecting the first direction;
a control unit that controls detection of the X-rays by the pixel unit; and
a processing unit that generates the X-ray image of the object based on a detection result of the X-rays by the pixel unit,
wherein the control unit controls the detection of the X-rays by the pixel unit so that the N pixel portions in each of the M pixel arrays sequentially detect the X-rays at a predetermined detection interval, and
wherein when a value obtained by dividing an arrangement pitch of the N pixel portions in the first direction by a reference speed corresponding to a movement speed of the object along the first direction is a basic value, the detection interval is a value obtained by dividing the basic value by a pixel shift value that is an integer of 2 or more and N or less.

2. The X-ray image acquisition device according to claim 1,
wherein the pixel shift value is selected from integers of 2 or more and N or less according to an input.

3. The X-ray image acquisition device according to claim 1 or 2,
wherein the control unit is configured to be capable of setting the detection interval to the basic value.

4. The X-ray image acquisition device according to claim 1 or 2,
wherein the control unit controls the detection of the X-rays by the pixel unit so that each of the N pixel portions detects the X-rays for a period shorter than the basic value.

5. The X-ray image acquisition device according to claim 1 or 2,
wherein the control unit controls the detection of the X-rays by the pixel unit so that each of the N pixel portions detects the X-rays multiple times during a detection period corresponding to the basic value.

6. The X-ray image acquisition device according to claim 1 or 2,
wherein the processing unit generates the X-ray image comprising a plurality of pixel regions by processing pieces of output data, which are detection results of the N pixel portions, so that the pieces of output data transmitted through the same region in the object are superimposed on each other, and
when generating the X-ray image, the processing unit processes the output data so that, among the pieces of output data forming one of the pixel regions, at least one piece of the output data that is different from the pieces of the output data forming the pixel region adjacent to the one pixel region is emphasized more than the pieces of the output data other than the at least one different piece of the output data, wherein the adjacent pixel region is the pixel region adjacent to the one pixel region on a side where a detection timing in a direction corresponding to the first direction is earlier.

7. An X-ray image acquisition system, comprising:
the X-ray image acquisition device according to claim 1 or 2;
an X-ray source that outputs the X-rays; and
a transport unit that transports the object along the first direction.

8. An X-ray image acquisition method, comprising:
a detection step of irradiating an object moving along a first direction with X-rays and detecting X-rays transmitted through the object using a pixel unit; and
a processing step of generating an X-ray image of the object based on a detection result in the detection step,
wherein the pixel unit comprises M (M is an integer of 2 or more) pixel arrays each comprising N (N is an integer of 2 or more) pixel portions for detecting X-rays, wherein the N pixel portions are aligned along the first direction and the M pixel arrays are aligned along a second direction intersecting the first direction,
wherein in the detection step, the N pixel portions in each of the M pixel arrays sequentially detect the X-rays at a predetermined detection interval, and
wherein when a value obtained by dividing an arrangement pitch of the N pixel portions in the first direction by a reference speed corresponding to a movement speed of the object along the first direction is a basic value, the detection interval is a value obtained by dividing the basic value by a pixel shift value that is an integer of 2 or more and N or less.
